# EUROPÄISCHE PATENTANMELDUNG

(11) **EP 2 075 096 A1**
(43) Veröffentlichungstag der Anmeldung: **01.07.2009**
(21) Anmeldenummer: 07124101.2
(22) Anmeldetag: 27.12.2007
(51) Int. Cl.: B25J 9/16

(54) **Verfahren und System zum hochpräzisen Positionieren mindestens eines Objekts in eine Endlage im Raum**

(71) Anmelder: Leica Geosystems AG, 9435 Heerbrugg (CH)
(72) Erfinder: Walser, Bernd, 9435 Heerbrugg (CH); Metzler, Bernhard, 6890 Lustenau (AT); Aebischer, Beat, 9435 Heerbrugg (CH); Siercks, Knut, 9402 Mörschwil (CH); Pettersson, Bo, London SW14 7DG (GB)
(74) Vertreter: Büchel, Kaminski & Partner

(57) **Zusammenfassung**

Die Erfindung betrifft ein Verfahren und ein System zum hochpräzisen Positionieren mindestens eines Objekts in eine Endlage im Raum. Ein Objekt (12) wird von dem Industrieroboter (11) innerhalb einer Greiftoleranz gegriffen und gehalten. Eine die Greiftoleranz korrigierende Abgleichgrösse wird für den Industrieroboter (11) bestimmt. Das Objekt (12) wird hochpräzise in eine Endlage verstellt durch die sich bis zum Erreichen der Endlage in einer vorgegebenen Toleranz wiederholenden Schritte: Aufnehmen von Bildaufnahmen durch Aufnahmeeinrichtungen (1ₐ, 1_{b}). Bestimmen der aktuellen Lage des Objekts (12) im Raum-Koordinatensystem aus den Positionen (Pₐ, P_{b}) der Aufnahmeeinrichtungen (1ₐ, 1_{b}), den durch Winkelmesseinheiten (4ₐ, 4_{b}) erfassten Winkelausrichtungen von Kameras (2ₐ, 2_{b}) der Aufnahmeeinrichtungen (1ₐ, 1_{b}), den Bildaufnahmen und der Kenntnis von Merkmalen (13) auf dem Objekt (12). Berechnen der Lagedifferenz zwischen der aktuellen Lage des Objekts (12) und der Endlage. Berechnen einer neuen Sollstellung des Industrieroboters (11) unter Berücksichtigung der Abgleichgrösse aus der aktuellen Stellung des Industrieroboters (11) und einer mit der Lagedifferenz verknüpften Grösse. Verstellen des Industrieroboters (11) in die neue Sollstellung.

## Beschreibung

Die Erfindung betrifft ein Verfahren zum hochpräzisen Positionieren mindestens eines Objekts, das bekannte optisch erfassbare Merkmale aufweist, in eine Endlage im Raum mittels eines Industrieroboters und mindestens zwei optischen Aufnahmeeinrichtungen sowie entsprechende Systeme zur Durchführung dieses Verfahrens. Solche Verfahren und Systeme finden insbesondere Anwendung bei Montage- und Fertigungsvorgängen in automatisierten Fertigungsstrassen, beispielsweise in der Automobilindustrie, bei denen ein Objekt, beispielsweise ein Blech- oder sonstiges Karosserieteil, mittels eines Industrieroboters hochpräzise in eine bestimmte Position und Ausrichtung im Raum zur Durchführung eines Arbeitsschritts gebracht werden soll.

Die aus dem Stand der Technik bekannten Handhabungssysteme, insbesondere Industrieroboter, z.B. Gelenkarmroboter, zum Positionieren eines mittels einer Greifvorrichtung gegriffenen Objekts in einer bestimmten Position und Ausrichtung im Raum, weisen interne Messsysteme auf, welche die Stellung der Glieder des Handhabungssystems erfassen können und somit Aufschluss über die Position und Ausrichtung der Greifvorrichtung im Raum geben. Zu unterscheiden ist hierbei zwischen achsbezogenen und raumbezogenen Koordinatensystemen. Die achsbezogenen Koordinatensysteme beziehen sich jeweils auf eine Achse des Roboters und deren jeweilige Stellung. Aus der kinematischen Kette der einzelnen Achsen und Glieder des Roboters und deren jeweiligen Stellungen ergibt sich die eindeutige Lage (Position und Ausrichtung) des Roboterwerkzeugs, also der Greifvorrichtung, am Ende der kinematischen Kette. Die Lage der Greifvorrichtung eines Industrieroboters wird jedoch vorzugsweise raumbezogen über den so genannten TCP, den Tool Center Point, beschrieben. Dies ist ein gedachter Referenzpunkt, der sich an geeigneter Stelle am Roboterwerkzeug befindet. Um zu beschreiben, welche Lage das Roboterwerkzeug einnehmen soll, werden die Position des TCP im Raum und seine Verdrehung definiert. Insbesondere mittels der so genannten Denavit-Hartenberg-Transformation wird mittels der Robotersteuerung errechnet, welche Stellung die einzelnen Roboterachsen einnehmen müssen, so dass das Roboterwerkzeug die vorgegebene Lage einnimmt. Die Lage der Greifvorrichtung mit deren TCP bezieht sich vorzugsweise auf das Weltkoordinatensystem, das Raum-Koordinatensystem oder das Zellen-Koordinatensystem, das beispielsweise auf die Basis der ersten Achse, der Grundachse, dem Grundgestell oder die Roboterbasis des Roboters direkt oder indirekt bezogen ist und hierzu gekoppelt ist. Auf dieses Welt-Koordinatensystem, Raum-Koordinatensystem oder Zellen-Koordinatensystem sind die restlichen Unter-Koordinatensysteme bezogen. Selbstverständlich muss es sich bei diesem Welt-Koordinatensystem, Raum-Koordinatensystem oder Zellen-Koordinatensystem nicht um ein absolutes Weltsystem handeln, sondern auch dieses System kann einem anderen System untergeordnet sein. Es handelt sich also hierbei um ein Koordinatensystem, das innerhalb des Prozesses das übergeordnete Bezugssystem bildet. Meist ist dieses System mit dem Boden der Prozesshalle, des Prozessraumes oder der Prozesszelle gekoppelt.

Somit ist es möglich, die Greifvorrichtung einschliesslich des gegriffenen Objekts in eine bestimmte vorgegebene Stellung durch entsprechende Eingabe an die Robotersteuerung zu verstellen. Das gegriffene Objekt wird also durch Vorgabe einer Stellung der Greifvorrichtung im Raum positioniert. Hierbei ergeben sich jedoch insbesondere die folgenden beiden Probleme.

Zum einen ist das Messsystem herkömmlicher Industrieroboter, die zum Halten schwerer Objekte ausgelegt sind, nicht derart präzise, dass die Greifvorrichtung eine derart genaue Lage, wie sie bei manchen Fertigungsverfahren gefordert ist, im Raum einnehmen kann. Zwar sind die Antriebe von Industrierobotern hinreichend präzise, jedoch nicht dessen Messsysteme. Durch die kinematische Kette multiplizieren sich die Messfehler der einzelnen Messglieder. Dies ergibt sich sowohl aus der Messungenauigkeit der einzelnen Messglieder, insbesondere der Winkelmesser eines Gelenkarmroboters, als auch aus der unvermeidbaren Elastizität der Roboterglieder.

Zum anderen ergibt sich aus der Stellung der Greifvorrichtung und somit deren Lage im Raum noch nicht zwangsläufig die Lage des Objekts im Raum, da das Objekt meist nur innerhalb einer Greiftoleranz gegriffen werden kann. Diese Greiftoleranz liegt oft weit über der geforderten Positionierungsgenauigkeit. Somit muss der Greiffehler, also die relative Lage des Objekts zur Greifvorrichtung, ebenfalls berücksichtigt werden. Hierzu kommen gesonderte, nicht mehr zum Roboter gehörende Messsysteme, insbesondere berührungslose optische Messsysteme zum Einsatz. Erst diese ermöglichen es, das Objekt im Raum mit der geforderten Genauigkeit in einer bestimmten Lage zu positionieren.

Aus der WO 2007/004983 A1 (Pettersson) ist ein Verfahren zum fügenden Schweissen von Werkstücken, insbesondere gepressten Blechteilen oder Verbundblechen, bekannt. Die zusammenzufügenden Werkstücke werden von Industrierobotern gehalten und von diesen relativ zueinander zur gegenseitigen Schweissverbindung positioniert. Während des Herstellens der Schweissverbindung werden die Werkstücke von den Industrierobotern in den jeweiligen Lagen gehalten, so dass die relative Lage der Teile zueinender erhalten bleibt. Das Schweissen erfolgt beispielsweise mittels eines Schweissroboters. Ein Messsystem misst die Positionen der Werkstücke, um ein Positionieren der Werkstücke vor dem Schweissvorgang zu ermöglichen. Die Messung erfolgt insbesondere kontinuierlich während des Schweissvorgangs. Das beschriebene Verfahren ermöglicht es, auf die ansonsten üblichen werkstückspezifischen und aufwendig herzustellenden Formen und Werkstückaufnahmen, in welche die Werkstücke vor dem Schweissen fixiert werden müssen, zu verzichten. Die Industrieroboter können für unterschiedlich geformte und ausgestaltete Werkstücke universell eingesetzt werden, da durch das Erfassen der Position der Werkstücke mittels des Messsystems ein Identifizieren und Kontrollieren der Werkstücke sowie ein genaues relatives Positionieren der Teile zueinander möglich ist. Somit kann ein einziges System für unterschiedliche Werkstücke verwendet werden. Der Wechsel von Werkstückaufnahmen erübrigt sich somit. Das beschriebene Verfahren eignet sich gemäss der Offenbarung insbesondere zum Schweissen von Blechteilen, vor allem in der Automobilindustrie. Als mögliches Messsystem wird allgemein ein Lasertriangulationsverfahren, in welchem zuvor definierte Punkte auf dem Werkstück vermessen werden, genannt. Hierzu sind beispielsweise Reflektoren auf dem Werkstück angebracht. Die Position jedes Reflektors kann gemäss der Beschreibung mittels einer Lichtquelle und einem zweidimensionalen Detektor ermittelt werden, so dass die Position und Ausrichtung des Werkstücks mittels dreier solcher Punkte erfasst werden kann. Der genaue Aufbau des Messsystems ist in der WO 2007/004983 A1 nicht näher beschrieben.

Die US 5,380,978 (Pryor) beschreibt ein Verfahren zum Positionieren von Objekten, insbesondere Blechteilen, im Raum mittels eines Industrieroboters. Als Messsystem werden unter anderem Kameras eingesetzt, die zur dreidimensionalen Erfassung der Lage des Objekts im Raum eine entsprechende Stereobasis aufweisen. Die Kameras sind zur Verstellung des Sichtfeldes schwenkbar und in einer speziellen Ausführungsform als Theodolitkamera, die auch über einen Laserdistanzmesser verfügen kann, ausgebildet. Der beschriebene Theodolit dient hierbei als präzise Verstellvorrichtung für die Kamera. Ähnliche Messsysteme werden auch in der US 4,851,905 (Pryor) und US 5,706,408 (Pryor) beschrieben.

Gemein ist diesen Systeme und Verfahren, dass die Positionen mehrerer ausgezeichneter Punkte auf dem Objekt mittels berührungsloser photogrammetrischer Koordinatenmessungen unter Zuhilfenahme bildverarbeitender Systeme ermittelt werden.

Zur berührungslosen photogrammetrischen Koordinatenmessung an der Oberfläche eines Objekts im Nahbereich wird aus Bildern, die das Objekt aus verschiedenen Perspektiven wiedergeben, durch Transformierung der Bilddaten in ein Objektkoordinatensystem, innerhalb welchem das Objekt zu vermessen ist und welchem beispielsweise das CAD-Modell des Objekts zugrunde liegt, auf die Abmessungen des Objekts und dessen Lage relativ zu weiteren Objekten im Bild geschlossen. Hierzu werden die Bilddaten in einer Datenverarbeitungseinheit verarbeitet. Die Grundlage der Koordinatenberechnung ist die Bestimmung der relativen Kameraorientierungen der beteiligten Bilder.

Es besteht hierbei, wie aus dem Stand der Technik bekannt, die Möglichkeit, zeitlich versetzt aus verschiedenen Perspektiven den zu vermessenden Flächenabschnitt der Objektoberfläche mittels einer einzigen Kamera aufzunehmen und im Anschluss die jeweils zweidimensionalen Bilddaten mittels eines Bildverarbeitungssystems zu einem so genannten dreidimensionalen Bild zu verarbeiten. Den Bildpunkten dieses dreidimensionalen Bildes werden hierbei jeweils Tiefeninformationen zugeordnet, so dass jedem zu untersuchenden Bildpunkt, insbesondere allen Bildpunkten, 3D-Bildkoordinaten in einem Bildkoordinatensystem, das sich aus den Kameras und deren Perspektiven bestimmt, zugeordnet sind. Unterschiedliche Bildverarbeitungsverfahren zur Erzeugung eines derartigen dreidimensionalen Bildes aus mehreren, die gleiche Szene aus unterschiedlichen Perspektiven zeigenden zweidimensionalen Bildern sind aus dem Stand der Technik bekannt.

Weiters besteht die Möglichkeit, wie ebenfalls aus dem Stand der Technik bekannt, anstelle der zeitlich versetzten Aufnahme des Flächenabschnitts aus unterschiedlichen Perspektiven mittels einer Kamera eine im Wesentlichen zeitgleiche Aufnahme unter Zuhilfenahme von mehreren Kameras durchzuführen. Dies hat sowohl den Vorteil, dass ohne Kamerabewegung ein dreidimensionales Erfassen des Flächenabschnitts möglich ist, als auch entfällt ein Erfassen der jeweiligen Kameraausrichtungen, da die Kameras zueinander eine feste relative Ausrichtung und Entfernung besitzen können.

Aus dem Stand der Technik sind unterschiedliche 3D-Bildaufnahmeeinrichtungen bekannt, die sich im Wesentlichen aus zwei oder drei Kameras zusammensetzen, die zueinander beabstandet, also einen Stereobasis aufweisend, in einem gemeinsamen Gehäuse fest miteinander gekoppelt zum Aufnehmen einer Szene aus jeweils unterschiedlichen, jedoch fixen relativen Perspektive untergebracht sind. Da der aufgenommene Flächenabschnitt nicht zwangsläufig charakteristische Bildmerkmale aufweist, die ein elektronisches Verarbeiten der Bilder ermöglichen, können Markierungen auf dem Flächenabschnitt aufgebracht werden. Diese Markierungen können mittels eines von der 3D-Bildaufnahmeeinheit auf den Flächenabschnitt projizieren strukturierten Lichtstrahls, insbesondere Laserstrahls, der beispielsweise ein optisches Raster oder ein optisches Markierungskreuz projiziert, erzeugt werden. Regelmässig beinhalten derartige 3D-Bildaufnahmeeinheiten auch eine Bildverarbeitungseinrichtung, die aus den mehreren im Wesentlichen gleichzeitig aufgenommenen Bildern unterschiedlicher Perspektiven ein dreidimensionales Bild ableitet.

Derartige 3D-Bildaufnahmeeinheiten sind beispielsweise die unter dem Markennamen "Optigo" und "OptiCell" bekannten Bildaufnahmesysteme der Firma "CogniTens", die drei in einem gleichschenkligen Dreieck angeordnete Kameras enthalten, sowie das System "Advent" der Firma "ActiCM" mit zwei nebeneinander angeordneten hochauflösenden CCD-Kameras sowie einem Projektor zur Projektion von strukturiertem Licht auf den aufzunehmenden Abschnitt.

Die Bestimmung der Koordinaten von zu vermessenden, aufgenommen Bildelementen erfolgt in der Regel mittels referenzierter Markierungen innerhalb des Bildes, von welchen Markierungen aus die eigentliche 3D-Koordinatenmessung stattfindet. Hierbei wird das Bildkoordinatensystem, welches sich auf das aufgenommene dreidimensionale Bild bezieht und somit auf die 3D-Bildaufnahmeeinheit bezogen ist, in das Objektkoordinatensystem, innerhalb welchem das Objekt zu vermessen ist und welchem beispielsweise das CAD-Modell des Objekts zugrunde liegt, transformiert. Die Transformation findet auf Basis von aufgenommenen Referenz-Markierungen statt, deren Positionen im Objektkoordinatensystem bekannt sind. Mit den aus dem Stand der Technik bekannten 3D-Bildaufnahmeeinheiten werden hierbei Genauigkeiten von unter 0,5 Millimeter erreicht.

Weiters sind 3D-Scansysteme insbesondere in Form von 3D-Laserscanners bekannt, welche innerhalb eines Flächenbereichs eine Tiefenabtastung durchführen und eine Punktwolke erzeugen. Hierbei ist zwischen seriellen Systemen, bei welchen ein Laserstrahl eine Fläche Zeile für Zeile abtastet, parallelen Systeme, bei welchen eine Scanlinie über eine Fläche gefächert wird, und vollparallelen Systemen, sogenannten RIMs oder Range Imaging Systemen, die eine Vielzahl an Punkten innerhalb eines Flächenbereich zeitgleich abtasten und somit ein Tiefenaufnahme des Flächenbereichs durchführen, zu unterscheiden. All diesen Systemen ist in der Regel gemein, dass die Tiefenabtastung mittels mindestens eines insbesondere über die Fläche bewegten Distanzmesslaserstrahls erfolgt. Insbesondere derartige serielle Systeme sind weit verbreitet und beispielsweise unter den Produktbezeichnungen
"Leica HDS 6000", "Leica ScanStation 2",
"Trimble GX 3D Scanner", "Zoller + Fröhlich IMAGER 5003" und
"Zoller + Fröhlich IMAGER 5006" kommerziell verfügbar.

Ein Problem jeder 3D-Bildaufnahmeeinheit bildet der bauartbedingt begrenzte Aufnahmebereich, innerhalb welchen eine Bildaufnahme mit der geforderten Auflösung erfolgen kann. Bei der dreidimensionalen Erfassung grösserer Objekte ist es daher unvermeidbar, mehrere einzelne dreidimensionale Aufnahmen aus unterschiedlichen Positionen und Ausrichtungen der 3D-Bildaufnahmeeinheit zu machen. Diese Vielzahl kleinerer Bildaufnahmen wird im Anschluss mittels Abgleich überlappender Bildbereiche und unter Zuhilfenahme von Markierungen innerhalb des aufgenommenen Flächenabschnitts zu einem grösseren dreidimensionalen Gesamtbild zusammengefügt. Unterschiedliche Verfahren zur Lösung dieser Aufgabe sind aus dem Stand der Technik bekannt. Ein allgemeines Problem bei diesen Verfahren besteht darin, dass die einzelnen dreidimensionalen Bilder, welche zu einem grösseren Bild zusammengefügt werden sollen, einen Überlappungsbereich aufweisen müssen. Das diskrete Verändern der Position der 3D-Bildaufnahmeeinheit von einem mindestens einen Referenzpunkt aufweisenden ersten Flächenabschnitt zu einem zweiten Flächenabschnitt, der vom ersten Flächenabschnitt distanziert ist und keinen Referenzpunkt enthält, ist mittels der bildverarbeitenden Systeme nicht möglich, falls keine weiteren Bilder aufgenommen wurden, welche die beiden Flächenabschnitte verbinden. Es ist daher erforderlich, eine Vielzahl an Zwischenbildaufnahmen durchzuführen, um die beiden zu vermessenden, distanzierten Flächenabschnitte optisch zu verbinden und die zusammenhängende Bildverarbeitung zu ermöglichen. Durch die Aufnahme einer Vielzahl an dreidimensionalen Bildern, die keinen unmittelbaren Messinhalt aufweisen, wird das gesamte Messerverfahren verlangsamt und Speicher- und Rechenressourcen beansprucht. Weiters wirken sich die zwangsläufig mit geringen Messfehlern behafteten Koordinatenmessungen innerhalb der Bildaufnahme beim Zusammensetzen der Vielzahl von Bildern drastisch auf die Messgenauigkeit aus, insbesondere im Falle entfernter Referenzpunkte.

Die Verwendung einer Vielzahl an Referenzpunkten, die bekannte Positionen im Objektkoordinatensystem haben, ist aufgrund des begrenzten Sichtfeldes der Kameras somit unvermeidbar. Ein Vorteil der beschriebenen rein photogrammetrischen Systeme besteht darin, dass die absolute Position und Ausrichtung der einzelnen Kameras der 3D-Bildaufnahmeeinheit im Objektkoordinatensystem nicht ermittelt werden muss, denn die absolute Positionsbestimmung der aufgenommenen Bildpunkte erfolgt aus der Kenntnis der Position der ebenfalls aufgenommenen Referenzpunkte im Bild, der relativen Ausrichtung der Kameras zueinander sowie der über Triangulation berechneten Relativpositionen der zu vermessenden Punkte relativ zu den Referenzpunkten im Bild. Das Vermessungssystem kann sich somit auf bildkalibrierte Kameras, deren Relativlage zueinander bekannt ist, und eine Bildverarbeitungseinrichtung begrenzen.

Ein Nachteil all dieser Systeme besteht darin, dass aufgrund des begrenzten Sichtfelds der Kameras und der begrenzten Bildauflösung ein Verstellen des Sichtfelds entweder durch Schwenken oder Positionsverändern der Kameras bzw. des zu vermessenden Objekts oft nicht vermeidbar ist. Dies ist vor allem beim Vermessen grösserer, hochpräzise zu vermessender Objekte der Fall, da ein bestimmter Abstand der Kameras zum Objekt aufgrund der begrenzten Bildauflösung zur Einhaltung der geforderten Messgenauigkeit nicht überschritten werden darf, jedoch das Sichtfeld der Kamera bei einer derartigen Objektnähe nur die Aufnahme eines Teils des Objekts zulässt. Somit ist es entweder erforderlich, eine Vielzahl an Referenzpunkten zu verwenden, so dass bei jeder Bildaufnahme eine entsprechende Anzahl an Referenzpunkten, bevorzugt mindestens drei Referenzpunkte, im Sichtfeld liegt, oder auf die Positionen bereits zuvor bestimmter Objektpunkte, insbesondere Markierungen auf dem Objekt, zurückzugreifen.

In diesem Fall werden, wie oben beschrieben, mehrere einzelne dreidimensionale Aufnahmen aus unterschiedlichen Positionen und Ausrichtungen der 3D-Bildaufnahmeeinheit gemacht. Diese Vielzahl der kleinerer Bildaufnahmen wird im Anschluss mittels Abgleich überlappender Bildbereiche und unter Zuhilfenahme von Markierungen innerhalb des aufgenommenen Flächenabschnitts zu einem grösseren dreidimensionalen Gesamtbild zusammengefügt. Dies kostet Zeit und erfordert die Verwendung an sich nicht zu vermessender Markierungen.

Weiters sind Messsysteme und Verfahren aus dem Stand der Technik bekannt, bei welchen die 3D-Bildaufnahmeeinheit von dem Kopf eines Industrieroboters oder einer Portal-Koordinatenmessmaschine getragen wird und verstellbar ist. Aufgrund des hohen Gewichts einer hochwertigen und hochauflösenden 3D-Bildaufnahmeeinheit, das zum Teil über 10 Kilogramm beträgt, ist eine präzise Erfassung der Position des 3D-Bildaufnahmeeinheit mit der erforderlichen Genauigkeit, die der Bildaufnahmegenauigkeit gleichkommt, nicht möglich, da dies einen derart stabilen Aufbau des Handhabungssystems erfordern würde, dass der Einsatzbereich der 3D-Bildaufnahmeeinheit auf stationäre Systeme begrenzt wäre. Industrieroboter sind aufgrund ihrer verhältnismässig geringen Messgenauigkeit, die erheblich geringer ist als die einer präzisen 3D-Bildaufnahmeeinheit, zur externen Referenzierung ungeeignet. Wiederum sind Portal-Koordinatenmessmaschinen nicht zum Tragen schwerer Lasten ausgelegt und liefern bei starker mechanischer Belastung keine zur Referenzierung brauchbaren Messergebnisse. Aus diesem Grunde können die vom Handhabungssystem allfällig gelieferten Positionsmesswerte, welche Aufschluss über die absolute und/oder relative Position der 3D-Bildaufnahmeeinheit geben könnten, zur Referenzierung der Bildaufnahmen, insbesondere mehrere dreidimensionaler Bildaufnahmen unterschiedlicher, nicht zusammenhängender Flächenabschnitt, nicht herangezogen werden.

Zwar eignen sich die beschriebenen Messsysteme auch für das hochpräzise Positionieren von Objekten im Raum mittels Handhabungssystemen und werden hierzu auch eingesetzt, jedoch sind die bisher aus dem Stand der Technik bekannten Systeme mit zahlreichen Nachteilen behaftet. Aufgrund der oben beschriebenen, im Wesentlichen rein über Bildverarbeitung erfolgenden Messmethode benötigen die Verfahren relativ viel Zeit und erfordern das Erfassen an sich nicht zu vermessender Referenz- oder Hilfsmarkierungen. Aufgrund des begrenzten Sichtfeldes der Kameras sind die 3D-Bildaufnahmeeinheiten meist in unmittelbarer Prozessnähe angeordnet, in der Regel auf einem Roboterarm oder in geringem Abstand zum Objekt. Wegen der damit verbundenen Prozessnähe ist die 3D-Bildaufnahmeeinheit allfälligen Partikeln und thermischen Einflüssen, die durch den Prozess - beispielsweise beim Schweissen - entstehen, ausgesetzt. Ebenfalls aufgrund der Prozessnähe müssen weitere Handhabungssysteme auf das Handhabungssystem der 3D-Bildaufnahmeeinheit abgestimmt sein, um Kollisionen zu vermeiden. Ein Bewegen der 3D-Bildaufnahmeeinheit und die damit verbundenen Neureferenzierung erfordert verhältnismässig viel Zeit und verlangsamt den gesamten Prozessablauf. Da die Relativlage der mehreren Kameras zur dreidimensionalen Bilderfassung stets bekannt sein muss, wird ein unabhängiges Ausrichten der Kameras vermieden. Anstatt dessen werden die Kameras bevorzugt mechanisch miteinander gekoppelt. Da eine prozessferne Positionierung der 3D-Bildaufnahmeeinheit einen entsprechend grossen Abstand der Kameras zueinander erfordert, um eine ausreichende Stereobasis zur dreidimensionalen Bilderfassung zu ermöglichen, ist eine mechanische Kopplung der Kameras in diesem Fall nicht mehr möglich. Somit wird bisher auf eine prozessferne Anordnung der 3D-Bildaufnahmeeinheit gänzlich verzichtet. Die beiden Ziele, einerseits ein hochpräzises, berührungsloses 3D-Messsystem mit einer Genauigkeit von vorzugsweise unter 0,1 Millimeter zum hochpräzisen Positionieren von Objekten mittels Industrierobotern einzusetzen, andererseits ein nicht unmittelbar dem Prozess ausgesetztes Messsystem, das flexibel zu handhaben ist und insbesondere frei positioniert werden kann, stellen somit einen bisher nicht hinreichend gelösten Zielkonflikt im Bereich der industriellen Objektpositionierung mittels Industrierobotern dar.

Aufgabe der Erfindung ist es daher, ein sich durch Flexibilität, Präzision und hohe Prozessgeschwindigkeit auszeichnendes Verfahren und ein entsprechendes System zum hochpräzisen Positionieren mindestens eines Objekts in eine Lage im Raum mittels eines Industrieroboters zur Verfügung zu stellen.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Verfahren wird zunächst allgemein beschrieben. Mögliche und bevorzugte Weiterbildungen der Erfindung werden im Anschluss allgemein unter Zuhilfenahme der Figuren, die schematisch dargestellte Ausführungsbeispiele zeigen, erläutert.

Das Verfahren zum hochpräzisen Positionieren mindestens eines Objekts in eine Endlage im Raum wird mittels eines Industrieroboters, einer ersten optischen Aufnahmeeinrichtung und mindestens einer zweiten optischen Aufnahmeeinrichtung durchgeführt. Der erste Industrieroboter ist in vorgebbare Stellungen verstellbar. Er ist innenkalibriert sowie in dem dreidimensionalen Raum-Koordinatensystem kalibriert und zu diesem in Bezug gebracht. Die erste optische Aufnahmeeinrichtung, die in einem dreidimensionalen Raum-Koordinatensystem kalibriert und in einer bekannten ersten Position mit einer bekannten Ausrichtung positioniert ist, umfasst eine optisch kalibrierte erste Kamera zur Bildaufnahme innerhalb eines bestimmten ersten Sichtfelds, eine erste Antriebseinheit zum - ein Verstellen des ersten Sichtfelds bewirkenden - Ausrichten der ersten Kamera und eine im Raum-Koordinatensystem kalibrierte erste Winkelmesseinheit zum hochpräzisen Erfassen der Winkelausrichtung der ersten Kamera, so dass das erste Sichtfeld im Raum-Koordinatensystem bestimmbar ist. Die mindestens eine zweite optische Aufnahmeeinrichtung, die in dem dreidimensionalen Raum-Koordinatensystem kalibriert und in einer bekannten zweiten Position mit einer bekannten Ausrichtung positioniert ist, umfasst eine optisch kalibrierte zweite Kamera zur Bildaufnahme innerhalb eines bestimmten zweiten Sichtfelds, eine zweite Antriebseinheit zum - ein Verstellen des zweiten Sichtfelds bewirkenden - Ausrichten der zweiten Kamera und eine im Raum-Koordinatensystem kalibrierte zweite Winkelmesseinheit zum hochpräzisen Erfassen der Winkelausrichtung der zweiten Kamera, so dass das zweite Sichtfeld im Raum-Koordinatensystem bestimmbar ist. Die mindestens zwei Positionen, also die der ersten und der zweiten Aufnahmeeinrichtung, sind derart beabstandet, dass eine dreidimensionale Bildaufnahme des mindestens einen Objekts mittels der mindestens zwei Aufnahmeeinrichtungen durch zumindest teilweise überscheidende Sichtfelder ermöglicht ist.

Das Verfahren umfasst folgende Schritte:

Ein erstes Objekt, das bekannte optisch erfassbare erste Merkmale aufweist, wird von dem ersten Industrieroboter innerhalb einer Greiftoleranz gegriffen und gehalten.

Eine derartige, die Greiftoleranz korrigierende erste Abgleichgrösse wird für den ersten Industrieroboter bestimmt, so dass das erste Objekt im Raum-Koordinatensystem durch Vorgabe einer Stellung des ersten Industrieroboters abgeglichen verstellbar ist. Dieses Bestimmen der ersten Abgleichgrösse erfolgt durch folgende Schritte: Ausrichten der mindestens zwei Kameras jeweils mittels der Antriebseinheit mit sich zumindest teilweise überschneidenden Sichtfeldern der Kameras auf zumindest einen Teil der ersten Merkmale des ersten Objekts, das in einer ersten Abgleichstellung des ersten Industrieroboters gehaltenen wird. Aufnehmen erster Bildaufnahmen mittels der beiden Kameras. Bestimmen der Lage des ersten Objekts im Raum-Koordinatensystem in der ersten Abgleichstellung des ersten Industrieroboters aus den Positionen der Aufnahmeeinrichtungen, den durch die Winkelmesseinheiten erfassten Winkelausrichtungen der Kameras, den ersten Bildaufnahmen und der Kenntnis der ersten Merkmale auf dem ersten Objekt. Bestimmen der ersten Abgleichgrösse durch Heranziehen der ersten Abgleichstellung des ersten Industrieroboters und zumindest der bestimmten Lage des ersten Objekts in der ersten Abgleichstellung des ersten Industrieroboters.

Das erste Objekt wird hochpräzise in eine erste Endlage verstellt durch die folgenden, sich wiederholenden Schritte, bis die erste Endlage in einer vorgegebenen Toleranz erreicht ist: Aufnehmen weiterer erster Bildaufnahmen mit den Kameras. Bestimmen der aktuellen Lage des ersten Objekts im Raum-Koordinatensystem aus den Positionen der Aufnahmeeinrichtungen, den durch die Winkelmesseinheiten erfassten Winkelausrichtungen der Kameras, den weiteren ersten Bildaufnahmen und der Kenntnis der ersten Merkmale auf dem ersten Objekt. Berechnen der Lagedifferenz zwischen der aktuellen Lage des ersten Objekts und der ersten Endlage. Berechnen einer neuen Sollstellung des ersten Industrieroboters unter Berücksichtigung der ersten Abgleichgrösse aus der aktuellen Stellung des ersten Industrieroboters und einer mit der Lagedifferenz verknüpften Grösse, und Verstellen des ersten Industrieroboters in die neue Sollstellung.

Das erfindungsgemässe System zum hochpräzisen Positionieren mindestens eines Objekts in eine Endlage im Raum mittels eines Industrieroboters umfasst einen ersten Industrieroboter, eine erste optische Aufnahmeeinrichtung, mindestens eine zweite optische Aufnahmeeinrichtung und eine Steuervorrichtung. Der erste Industrieroboter ist derart kalibriert, dass er in vorgebbare Stellungen verstellbar ist. Hierzu ist der Industrieroboter innenkalibriert und zu dem Raum-Koordinatensystem in Bezug gebracht. Die erste optische Aufnahmeeinrichtung, die in einem dreidimensionalen Raum-Koordinatensystem kalibriert und in einer bekannten ersten Position mit einer bekannten Ausrichtung positioniert ist, hat eine optisch kalibrierte erste Kamera zur Bildaufnahme innerhalb eines bestimmten ersten Sichtfelds, eine erste Antriebseinheit zum - ein Verstellen des ersten Sichtfelds bewirkenden - Ausrichten der ersten Kamera und eine im Raum-Koordinatensystem kalibrierte erste Winkelmesseinheit zum hochpräzisen Erfassen der Winkelausrichtung der ersten Kamera, so dass das erste Sichtfeld im Raum-Koordinatensystem bestimmbar ist. Die mindestens eine zweite optische Aufnahmeeinrichtung, die in dem dreidimensionalen Raum-Koordinatensystem kalibriert und in einer bekannten zweiten Position mit einer bekannten Ausrichtung positioniert ist, hat eine optisch kalibrierte zweite Kamera zur Bildaufnahme innerhalb eines bestimmten zweiten Sichtfelds, eine zweite Antriebseinheit zum - ein Verstellen des zweiten Sichtfelds bewirkenden - Ausrichten der zweiten Kamera und eine im Raum-Koordinatensystem kalibrierte zweite Winkelmesseinheit zum hochpräzisen Erfassen der Winkelausrichtung der zweiten Kamera, so dass das zweite Sichtfeld im Raum-Koordinatensystem bestimmbar ist. Die mindestens zwei Positionen der ersten und zweiten Aufnahmeeinrichtung sind derart beabstandet, dass eine dreidimensionale Bildaufnahme des mindestens einen Objekts mittels der mindestens zwei Aufnahmeeinrichtungen durch zumindest teilweise überscheidende Sichtfelder ermöglicht ist. Die Steuervorrichtung weist eine zur Bildverarbeitung ausgebildete Datenverarbeitungseinrichtung auf. Die Steuervorrichtung steht mit dem ersten Industrieroboter und den mindestens zwei optischen Aufnahmeeinrichtungen derart in Datenverbindung, dass der Steuervorrichtung die von den Kameras aufgenommene Bildaufnahmen zugeführt werden, der Steuervorrichtung die von den Winkelmesseinheiten erfassten Winkelausrichtungen der Kameras zugeführt werden, die Antriebseinheiten mittels der Steuervorrichtung zum Ausrichten der Kameras angesteuert werden und der erste Industrieroboter in Stellungen, die durch die Steuervorrichtung vorgegeben werden, verstellt wird.

Die Steuervorrichtung und deren Datenverarbeitungseinrichtung sind derart ausgebildet und stehen derart mit den genannten Komponenten in der Datenverbindung, dass folgende Schritte durch Signalaufnahme, Signalauswertung, Signalberechnung und Signalausgabe ausgeführt werden:

Ein erstes Objekt, das der Steuervorrichtung bekannte optisch erfassbare erste Merkmale aufweist, wird von dem ersten Industrieroboter innerhalb einer Greiftoleranz gegriffen und gehalten.

Eine derartige, die Greiftoleranz korrigierende erste Abgleichgrösse wird für den ersten Industrieroboter durch die Steuervorrichtung bestimmt, so dass das erste Objekt im Raum-Koordinatensystem durch Vorgabe einer Stellung des ersten Industrieroboters abgeglichen verstellbar ist. Das Bestimmen dieser ersten Abgleichgrösse mittels der Steuervorrichtung erfolgt durch die Schritte: Ausrichten der mindestens zwei Kameras jeweils mittels der Antriebseinheit mit sich zumindest teilweise überschneidenden Sichtfeldern auf zumindest einen Teil der ersten Merkmale des ersten Objekts, das in einer ersten Abgleichstellung des ersten Industrieroboters gehaltenen wird. Aufnehmen erster Bildaufnahmen mittels der Kameras. Bestimmen der Lage des ersten Objekts im Raum-Koordinatensystem in der ersten Abgleichstellung des ersten Industrieroboters aus den Positionen der Aufnahmeeinrichtungen, den durch die Winkelmesseinheiten erfassten Winkelausrichtungen der Kameras, den ersten Bildaufnahmen und der Kenntnis der ersten Merkmale auf dem ersten Objekt. Bestimmen der ersten Abgleichgrösse durch Heranziehen der ersten Abgleichstellung des ersten Industrieroboters und zumindest der bestimmten Lage des ersten Objekts in der ersten Abgleichstellung des ersten Industrieroboters.

Das erste Objekt wird durch die Steuervorrichtung hochpräzise in eine erste Endlage durch die sich solange wiederholenden Schritte verstellt, bis die erste Endlage in einer vorgegebenen Toleranz erreicht ist: Aufnehmen weiterer erster Bildaufnahmen durch die Kameras. Bestimmen der aktuellen Lage des ersten Objekts im Raum-Koordinatensystem aus den Positionen der Aufnahmeeinrichtungen, den durch die Winkelmesseinheiten erfassten Winkelausrichtungen der Kameras, den weiteren ersten Bildaufnahmen und der Kenntnis der ersten Merkmale auf dem ersten Objekt. Berechnen der Lagedifferenz zwischen der aktuellen Lage des ersten Objekts und der ersten Endlage. Berechnen einer neuen Sollstellung des ersten Industrieroboters unter Berücksichtigung der ersten Abgleichgrösse aus der aktuellen Stellung des ersten Industrieroboters und einer mit der Lagedifferenz verknüpften Grösse. Verstellen des ersten Industrieroboters in die neue Sollstellung.

Das erfindungsgemässe Verfahren und das System werden im Folgenden anhand von schematisch dargestellten Ausführungsbeispielen beschrieben.

Im Einzelnen zeigen
- Figur 1a: das erfindungsgemässe Verfahren und System mit zwei Aufnahmeeinrichtungen zum Positionieren eines ersten Objekts;
- Figur 1b: ein Flussdiagramm des Verfahrensablaufs;
- Figur 2: das Verfahren und System mit zwei Aufnahmeeinrichtungen und einer Emissionseinrichtung zum Positionieren eines ersten Objekts;
- Figur 3: das Verfahren und System mit zwei Industrierobotern zum Positionieren eines ersten und zweiten Objekts; und
- Figur 4: das Verfahren und System mit drei Industrierobotern zum Positionieren eines ersten und zweiten Objekts sowie eines Bearbeitungswerkzeugs.

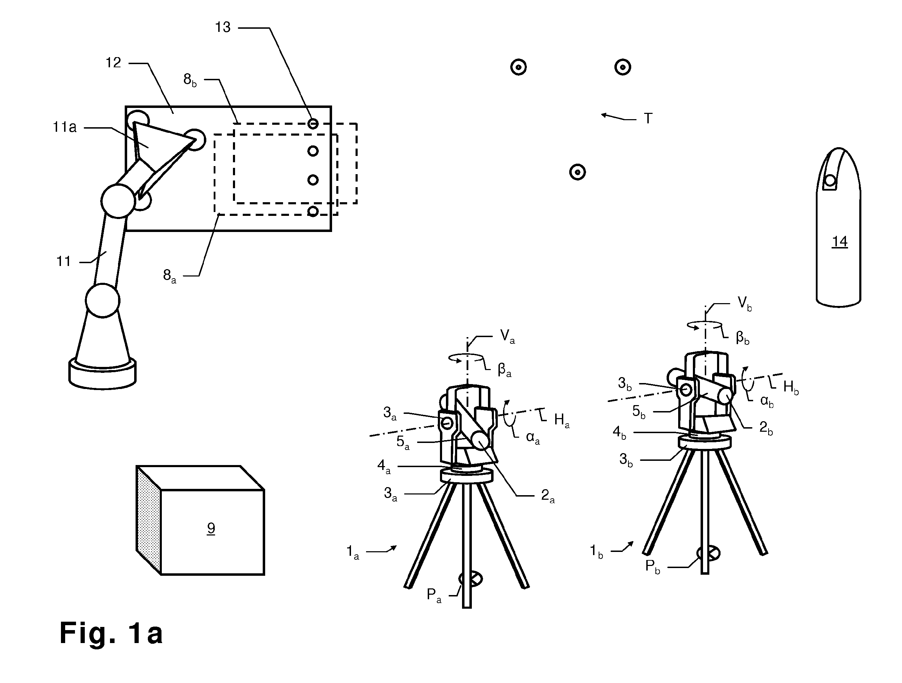

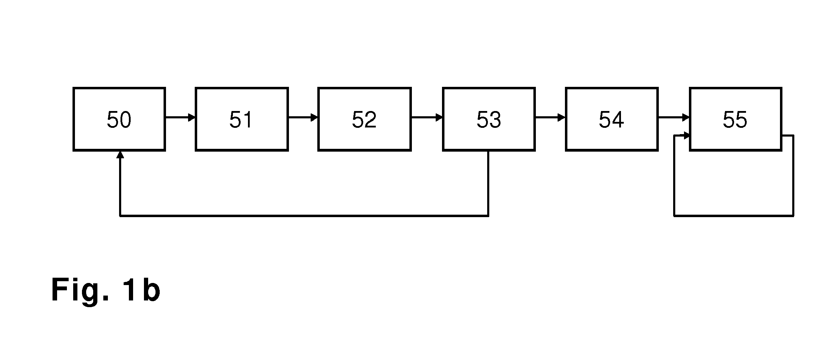

Die Figur 1a zeigt eine erste Ausführungsform des Systems und Verfahrensablaufs zum hochpräzisen Positionieren eines ersten Objekts in eine erste Endlage im Raum. Die Verfahrensschritte sind in Figur 1b veranschaulicht. Die Figuren 1a und 1b werden gemeinsam erläutert.

Das erfindungsgemässe Verfahren dient zum hochpräzisen Positionieren mindestens eines Objekts in eine Endlage im Raum mittels mindestens eines Industrieroboters. Bei der Endlage im Raum handelt es sich um eine Position und Ausrichtung, die das Objekt hochpräzise - insbesondere mit einer Genauigkeit von unter 0,5 Millimeter, vorzugsweise unter 0,2 Millimeter, im Speziellen unter 0,1 Millimeter - einzunehmen hat. Als Endlage wird allgemein diejenige Position und Ausrichtung des Objekts verstanden, in welche das Objekt im Rahmen des Verfahrens gebracht werden soll. Selbstverständlich kann das Objekt im Anschluss in eine oder beliebig viele weitere, neue Endlagen gebracht werden.

Die Verfahrenskomponenten umfassen einen ersten Industrieroboter 11, eine erste optische Aufnahmeeinrichtung 1ₐ und mindestens eine zweite optische Aufnahmeeinrichtung 1_{b}. Zur Durchführung des Verfahrens mittels des Systems ist weiters eine Steuervorrichtung 9 vorgesehen.

Der erste Industrieroboter 11 ist zum Greifen eines ersten Objekts 12 ausgebildet. Beispielsweise handelt es sich bei dem Industrieroboter 11 um einen Gelenkarmroboter mit einem Greifer 11a, der innerhalb sechs Freiheitsgraden verstellbar ist. Der Greifer 11a ist als pneumatischer Greifer, beispielsweise zum Greifen eines Blechstücks, ausgebildet. Bei dem Greifer kann es sich jedoch auch um einen mechanischen Greifer, insbesondere Zangengreifer, oder sonstigen Greifer zum mechanischen Koppeln eines verstellbaren Glieds des Industrieroboters 11 handeln. Der Greifer 11a ist in vorgebbare Stellungen verstellbar, indem dem Industrieroboter 11 eine Sollstellung des Greifers 11a vorgegeben wird. Hierzu verfügt der Industrieroboter 11 über interne Mess-, Regel- und Koordinatentransformationssysteme. Unter einem Industrieroboter 11 ist allgemein ein Handhabungssystem, wie eingangs beschrieben, zu verstehen, das zum Greifen und Positionieren eines Objekts geeignet ist.

Die erste optische Aufnahmeeinrichtung 1ₐ sowie die zweite optische Aufnahmeeinrichtung 1_{b} sind in einem dreidimensionalen Raum-Koordinatensystem kalibriert und in einer bekannten ersten Position Pₐ bzw. zweiten Position P_{b} jeweils mit einer bekannten Ausrichtung positioniert. Somit sind jeweils sowohl die Position wie auch die Winkelausrichtung mittelbar oder unmittelbar in demjenigen Koordinatensystem, in welchem auch das erste Objekt 12 zu positionieren ist, bekannt. Die optischen Aufnahmeeinrichtungen 1ₐ und 1_{b} sind in diesem Raum-Koordinatensystem kalibriert. Sie besitzen jeweils eine optisch kalibrierte Kamera, nämlich eine erste Kamera 2ₐ und eine zweite Kamera 2_{b}, zur Bildaufnahme jeweils innerhalb eines bestimmten Sichtfelds 8ₐ bzw. 8_{b}, so dass innerhalb des jeweiligen Sichtfelds 8ₐ bzw. 8_{b} optische Messungen in der Bildaufnahme erfolgen können.

Zur einfacheren Darstellung werden die im Ausführungsbeispiel identischen Aufnahmeeinrichtungen 1ₐ und 1_{b} gemeinsam beschrieben, wobei sich der Index "a" auf die erste Aufnahmeeinrichtung 1ₐ und der Index "b" auf die zweite Aufnahmeeinrichtung 1_{b} bezieht.

Unter einer Kamera ist allgemein eine elektronische Vorrichtung zur Aufnahme optisch erfassbarer Punkte zu verstehen, wobei die Kameras 2ₐ und 2_{b} jeweils über die hierzu erforderliche Ausstattung, insbesondere ein Objektiv und entsprechende Bildaufnahmeelemente, insbesondere einen CCD- oder CMOS-Bildsensor und eine entsprechende Elektronik, verfügen. Bei dem Objektiv kann es sich um ein beliebiges Objektiv, beispielsweise ein Fixfokus-Objektiv, ein ZoomObjektiv oder ein Vario-Objektiv, insbesondere mit Motorzoom und Autofokus, handeln. Die Kameras sind innenkalibriert, so dass allfällige Fehler insbesondere in der Optik, den Bildsensoren oder der Elektronik, beispielsweise Verzeichnungen etc. berücksichtigt und ausgeglichen werden können. Somit eignen sich die Kameras zur photogrammetrischen Messung. Weiters besitzen die optischen Aufnahmeeinrichtungen 1ₐ und 1_{b} jeweils mindestens eine Antriebseinheit 3ₐ bzw. 3_{b} zum - ein Verstellen des jeweiligen Sichtfelds 8ₐ bzw. 8_{b} der Kamera 2ₐ und 2_{b} bewirkenden - Ausrichten der jeweiligen Kamera 2ₐ und 2_{b}. Beispielsweise ist die jeweilige Antriebseinheit 3ₐ bzw. 3_{b} eine Schwenkeinheit zum Schwenken der Kamera 2ₐ bzw. 2_{b} um zwei Schwenkachsen. Bei diesen Schwenkachsen kann es sich in einer möglichen aber nicht notwendigen Ausführungsvariante um jeweils eine in Bezug auf das Raum-Koordinatensystem horizontale Kippachse Hₐ bzw. H_{b} und eine vertikale Stehachse Vₐ bzw. V_{b} handeln.

Weiters besitzen die optischen Aufnahmeeinrichtungen 1ₐ und 1_{b} jeweils eine im Raum-Koordinatensystem kalibrierte Winkelmesseinheit 4ₐ bzw. 4_{b} zum hochpräzisen Erfassen der Winkelausrichtung der jeweiligen Kamera 2ₐ und 2_{b}, so dass das jeweilige Sichtfeld 8ₐ bzw. 8_{b} im Raum-Koordinatensystem bestimmbar ist. Aufgrund der inneren, sich auf die Kamera und die Winkelmesseinheit beziehende Kalibrierung der beiden Aufnahmeeinrichtungen 1ₐ und 1_{b} sowie der äusseren Referenzierung der jeweiligen optischen Aufnahmeeinrichtung 1ₐ bzw. 1_{b} im Raum-Koordinatensystem definiert jeder Bildpunkt hochpräzise eine Gerade im Raum-Koordinatensystem, die sich erstens aus der Lage des Bildpunkts auf dem Bildsensor, also der Bildaufnahme, zweitens aus der mittels der jeweiligen Winkelmesseinheit 4ₐ bzw. 4_{b} erfassten Ausrichtung der jeweiligen Kamera 2ₐ bzw. 2_{b} und drittens der bekannten Position der jeweiligen optischen Aufnahmeeinrichtung 1ₐ bzw. 1_{b} sowie viertens den jeweiligen Kalibrierungsparametern ergeben.

Die Winkelmesseinheiten 4ₐ und 4_{b} erfassen im gezeigten Ausführungsbeispiel jeweils die horizontale Winkelausrichtung αₐ bzw. α_{b} um die Stehachse Vₐ bzw. V_{b} und die vertikale Winkelausrichtung βₐ und β_{b} um die Kippachse Hₐ und H_{b} im Raum-Koordinatensystem. Die horizontale Kippachse Hₐ bzw. H_{b} und die vertikale Stehachse Vₐ bzw. V_{b} schneiden sich im Wesentlichen. Somit sind die mindestens zwei Aufnahmeeinrichtungen 1ₐ und 1_{b} jeweils als eine Art Video-Theodolit ausgebildet, wobei hierunter ein Theodolit mit einer Kamera, die entweder koaxial in den Theodolit eingebunden ist oder nicht-koaxial insbesondere auf dem Fernrohr des Theodolits angeordnet ist, zu verstehen ist.

Die Positionen Pₐ und P_{b} und Aussenkalibrierungsparameter der Aufnahmeeinrichtungen 1ₐ und 1_{b} können durch referenzierte externe Messsysteme, beispielsweise optische Messsysteme wie einen Lasertracker 14, bestimmt werden, welche die jeweilige Position der Aufnahmeeinrichtungen 1ₐ und 1_{b} im Raum bestimmen. Dies kann durch Zielmarken, welche auf den Aufnahmeeinrichtungen 1ₐ und 1_{b} angebracht sind, erfolgen. Auch die externe Kalibrierung der Ausrichtungen kann mittels externer Messsysteme erfolgen. Weiters ist es möglich, die Aufnahmeeinrichtungen 1ₐ und 1_{b} auf Referenzpunkten, deren Positionen hochpräzise im Raum-Koordinatensystem bekannt sind, insbesondere mittels Zwangszentrierungen zu positionieren. Alternativ besteht die Möglichkeit, dass sich die Aufnahmeeinrichtungen 1ₐ und 1_{b} mittels eigener Messsysteme im Raum referenzieren und kalibrieren. Hierzu weisen die Aufnahmeeinrichtungen 1ₐ und 1_{b} jeweils einen Laserdistanzmesser 5ₐ und 5_{b} auf, der gemeinsam mit der jeweiligen Kamera 2ₐ bzw. 2_{b} mittels der jeweiligen Antriebseinheit 3ₐ bzw. 3_{b} ausrichtbar ist und dessen Winkelausrichtung mittels der jeweiligen im Raum-Koordinatensystem kalibrierten Winkelmesseinheit 4ₐ bzw. 4_{b} hochpräzise erfassbar ist. In anderen Worten handelt es sich bei den Aufnahmeeinrichtungen 1ₐ bzw. 1_{b} jeweils um Video-Tachymeter, also Theodolite mit Laserdistanzmesser, mit sehr hochauflösenden Kameras. Selbstverständlich ist es möglich, andere geeignete Schwenk- und Messvorrichtungen zum Orientieren der Kameras und exakten Erfassen der Ausrichtungen zu verwenden. Jedoch sei darauf hingewiesen, dass ein Theodolit, ein Tachymeter oder eine so genannte Totalstation aufgrund der Winkelmessgenauigkeit zur Verwendung prädestiniert sind.

Die Positionen Pₐ und P_{b} der jeweiligen Aufnahmeeinrichtung 1ₐ bzw. 1_{b} im Raum-Koordinatensystem werden durch Zielen auf ortsfeste Zielmarken T mittels des jeweiligen Laserdistanzmessers 5ₐ bzw. 5_{b} bestimmt. Alternativ oder zusätzlich kann die Selbstreferenzierung über Triangulation durch Bildaufnahme der ortsfesten Zielmarken und Bildverarbeitung stattfinden.

Die erste Position Pₐ und die zweite Position P_{b} sind derart beabstandet und die optischen Aufnahmeeinrichtung 1ₐ bzw. 1_{b} sind derart ausgebildet, dass eine dreidimensionale Bildaufnahme des mindestens einen Objekts mittels der mindestens zwei Aufnahmeeinrichtungen 1ₐ und 1_{b} durch zumindest teilweise überscheidende Sichtfelder 8ₐ und 8_{b} ermöglicht ist. In anderen Worten ist die Stereobasis derart, dass die Aufnahme eines dreidimensionalen Bildes, wie eingangs beschrieben, mit einer den Bildpunkten zugeordneten Tiefeninformation mit der geforderten Genauigkeit möglich ist. Das Gewinnen einer Tiefeninformation zweier aus unterschiedlichen Perspektiven aufgenommener elektronischer Bilder mittels Bildverarbeitung ist aus dem Stand der Technik bekannt und braucht an dieser Stelle nicht näher erläutert werden.

Die Steuervorrichtung 9 weist eine zur Bildverarbeitung ausgebildete Datenverarbeitungseinrichtung auf. Die Steuervorrichtung 9 steht mindestens mit dem ersten Industrieroboter 11 und den mindestens zwei optischen Aufnahmeeinrichtungen 1ₐ und 1_{b} in Datenverbindung. Der Steuervorrichtung 9 werden die von den Kameras 2ₐ und 2_{b} aufgenommene Bildaufnahmen zur Durchführung der Bildverarbeitung und Gewinnung der Tiefeninformation zugeführt. Weiters erhält die Steuervorrichtung 9 die von den Winkelmesseinheiten 4ₐ und 4_{b} erfassten Winkelausrichtungen der Kameras 2ₐ und 2_{b} als Eingangssignal. Die Antriebseinheiten 3ₐ und 3_{b} sind mittels der Steuervorrichtung 9 zum Ausrichten der Kameras 2ₐ und 2_{b} angesteuert. Der erste Industrieroboter 11 kann in Stellungen, die durch die Steuervorrichtung 9 vorgegeben werden, verstellt werden. Die hierzu erforderliche Datenverbindung kann mittels Spannungssignalen, Funksignalen, optischer Signale oder sonstiger Kommunikationswege erfolgen. Die Referenz- und Kalibrierungsparameter, insbesondere die einzelnen Positionen, Ausrichtungen und Abmessungen der beteiligten Komponenten, sind - sofern zur Durchführung des Verfahrens erforderlich - in der Steuervorrichtung 9 gespeichert. Bei der Steuervorrichtung 9 kann es sich um eine Einheit, beispielsweise einen Personal Computer mit geeigneten Schnittstellen, als auch um eine Mehrzahl miteinander kommunizierender oder vernetzter, örtlich getrennter Einzelkomponenten, die beispielsweise Bestandteil einzelner Vorrichtungen sind, handeln. Insbesondere ist es möglich, dass die abstrakt zu verstehende Steuervorrichtung 9 Bestandteil der optischen Aufnahmeeinheiten 1ₐ und 1_{b} und/oder des ersten Industrieroboters 11 ist.

Das erste Objekt 12, das in die Endlage im Raum positioniert werden soll, weist bekannte optisch erfassbare erste Merkmale 13 auf. Es kann sich bei diesen ersten Merkmalen 13 um beliebige Merkmale, die mittels der Kameras 2ₐ und 2_{b} der Aufnahmeeinheiten 1ₐ und 1_{b} erfasst werden können, handeln. Unter dem Begriff "optisch erfassbar" ist also die Erfassbarkeit durch die Kameras 2ₐ und 2_{b} zu verstehen und nicht zwangsläufig die Sichtbarkeit durch das menschliche Auge.

Die optisch erfassbaren Merkmale können von Merkmalen des Objekt, insbesondere dessen Form, Oberflächenverlauf und Oberflächenbeschaffenheit, beispielsweise Ecken, Kanten, Bohrungen, Aussparungen und Sicken, gebildet werden. Alternativ oder zusätzlich können die Merkmale auf dem Objekt angebracht sein, beispielsweise in Form von Klebe- oder Farbmarkierungen. Vorzugsweise erstrecken sich die Merkmale in mindestens zwei Dimensionen, beispielsweise in Form dreier nicht auf einer Geraden liegender Punkte. Die Merkmale sind derart, dass deren Positionsbestimmungen die Lage, also die Position und Ausrichtung des Objekts im Raum möglichst eindeutig definieren.

Bei dem Objekt 12 handelt es sich um ein beliebiges, im Raum hochpräzise zu positionierendes Objekt, das von dem ersten Industrieroboter 11 gegriffen und gehalten werden kann, beispielsweise um ein Blechteil.

Im Folgenden wird der erfindungsgemässe Verfahrensablauf beschrieben, wobei auch auf die Figur 1b, die den Verfahrensablauf in Form eines Flussdiagramms darstellt, verwiesen sein.

Im Schritt 50 wird das erste Objekt 12, das sich beispielsweise in einer Lagerposition befindet, von dem ersten Industrieroboter 11 mittels dessen Greifers 11a innerhalb einer Greiftoleranz gegriffen und gehalten. Die Greiftoleranz liegt über der Toleranz, innerhalb welcher das erste Objekt 12 in der Endlage positioniert werden soll. Insbesondere pneumatische Greifer ohne Zwangszentrierung zum Objekt ermöglichen kein hochpräzises Greifen, so dass die relative Lage des Objekts zum Greifer eine Toleranz aufweist, die auszugleichen, also zu korrigieren ist.

Im optionalen, in einer Weiterbildung der Erfindung erfolgenden Schritt 51 wird der erste Industrieroboter 11, der das erste Objekt 12 mit dem unbekannten Greiffehler hält, in eine erste Abgleichstellung zum Bestimmen einer ersten Abgleichgrösse verstellt. In dieser Abgleichstellung des ersten Industrieroboters 11 ist das erste Objekt 12 für die beiden Kameras 1ₐ und 1_{b} zur dreidimensionalen Bildaufnahme gut sichtbar. Sofern diese Sichtbarkeit bereits nach dem Greifen gewährleistet ist und sich das erste Objekt 12 bereits in einer Position befindet, kann dieser Schritt 51 auch entfallen.

Im darauf folgenden Schritt 52 wird eine erste Abgleichgrösse ermittelt, um diese Greiftoleranz zu korrigieren. Diese die Greiftoleranz korrigierende erste Abgleichgrösse für den ersten Industrieroboter 11 dient dazu, dass das erste Objekt 12 im Raum-Koordinatensystem durch Vorgabe einer Stellung des ersten Industrieroboters 11 abgeglichen verstellbar ist. Unter einem abgeglichenen Verstellen ist zu verstehen, dass bei der Vorgabe der Stellung, welche der Greifer 11a des Roboters einnehmen soll, der Greiffehler, mit welchem das Teil gegriffen wurde, korrigiert wird. Der Greiffehler wird also durch eine Korrekturgrösse, die erste Abgleichgrösse, berücksichtig. Der Greiffehler kann in allen 6 Freiheitsgraden erfolgen, so dass die Abgleichgrösse entsprechende Werte insbesondere in Form eines Tensors annehmen kann. Im Idealfall, also bei exaktem Greifen des ersten Objekts durch den Greifer 11a, wäre die Abgleichgrösse gleich Null.

Das Bestimmen der ersten Abgleichgrösse erfolgt durch folgende Teilschritte. Zunächst werden die mindestens zwei Kameras 2ₐ, 2_{b} jeweils mittels der Antriebseinheit 3ₐ, 3_{b} mit sich zumindest teilweise überschneidenden Sichtfeldern 8ₐ, 8_{b} auf zumindest einen Teil der ersten Merkmale 13 des ersten Objekts 12, das in der ersten Abgleichstellung des ersten Industrieroboters 11 gehaltenen wird, geschwenkt. Vorzugsweise befinden sich mindestens drei Punkte, welche die ersten Merkmale 13 bilden, im Überschneidungsbereich der Sichtfelder 8ₐ, 8_{b}. Nun werden erste Bildaufnahmen mittels der beiden Kameras 2ₐ, 2_{b} aufgenommen. Aus diesen Bildaufnahmen wird darauf folgend die Lage des ersten Objekts 12, das in der ersten Abgleichstellung des ersten Industrieroboters 11 gehalten wird, im Raum-Koordinatensystem bestimmt. Durch die Bestimmung der Position dreier ausgezeichneter Punkte ist diese Lagebestimmung bereits möglich. Die Lage des ersten Objekts 12 wird zum einen bestimmt aus der Kenntnis der Positionen Pₐ, P_{b} der Aufnahmeeinrichtungen 1ₐ, 1_{b} den durch die Winkelmesseinheiten 4ₐ, 4_{b} erfassten Winkelausrichtungen der Kameras 2ₐ, 2_{b} und den ersten Bildaufnahmen. Mittels dieser Informationen ist es bereits möglich, photogrammetrisch insbesondere durch Bildverarbeitung in der Steuervorrichtung 9 die Position einzelner erfasster Punkte im Raum-Koordinatensystem zu bestimmen. Um die Lage des Objekts hieraus abzuleiten, ist noch die Kenntnis der ersten Merkmale 13 auf dem ersten Objekt 12 erforderlich, um aus der Position oder Lage der ersten Merkmale 13 auf die Lage des ersten Objekts im Raum schliessen zu können. Ist beispielsweise aus einem elektronischen Modell bekannt, dass und an welcher Stelle ein Blechteil spezifische Bohrungen aufweist, so kann aus der Lage dieser Bohrungen auf die Lage des Objekts geschlossen werden. Nun wird die erste Abgleichgrösse durch Heranziehen der ersten Abgleichstellung des ersten Industrieroboters 11, aus welcher sich die Ideallage bei fehlerfreiem Greifen ergibt, und zumindest der bestimmten, also tatsächlichen Lage des ersten Objekts 12 in der ersten Abgleichstellung des ersten Industrieroboters 11 bestimmt.

In einer Weiterbildung der Erfindung sind die Merkmale 13 des Objekts 11 im Wesentlichen aus einem durch die elektronische Datenverarbeitungseinrichtung der Steuervorrichtung 9 verarbeitbaren Modell bekannt. Hierbei kann es sich um ein mittels CAD gewonnenes elektronisches Modell handeln. Mittels einer Bildverarbeitung, die auf der elektronischen Datenverarbeitungseinrichtung ausgeführt wird, werden die Merkmale 13 in dem Modell und/oder in den Bildaufnahmen identifiziert und diese Merkmale 13 aus dem Modell sowie die Merkmale 13 aus den Bildaufnahmen einander zugeordnet. Die Lage des Objekts 12 im Raum-Koordinatensystem wird aus der erfassten Position der aufgenommenen Merkmale 13 im Raum-Koordinatensystem und den zugeordneten Merkmalen 13 bestimmt. Derartige Bildverarbeitungs- und Merkmalidentifikationsverfahren sind aus dem Stand der Technik bekannt und müssen an dieser Stelle nicht weiter erläutert werden.

Da nun bekannt ist, mit welchem Fehler das erste Objekt 12 gegriffen wurde und eine entsprechende erste Abgleichgrösse bestimmt wurde, ist es jetzt möglich, das erste Objekt 12 mittels des ersten Industrieroboters 11 im Rahmen der Messgenauigkeit der Sensoren des ersten Industrieroboters 11 zu positionieren. Diese Messgenauigkeit ist jedoch nicht ausreichend, weshalb es ein weiteres Positionierungsproblem zu lösen gilt.

Beispielsweise aufgrund von Fertigungstoleranzen und Umgebungsparametern ist es möglich, dass das erste Objekt 11, beispielsweise ein Blechteil, selbst einer bestimmten Toleranz in Abmessung und Form unterliegt, die zu berücksichtigen ist. Aus diesem Grunde sieht die Erfindung in einer Weiterbildung die Berücksichtigung von Variationen des ersten Objekts vor.

In einer Weiterbildung der Erfindung gemäss dem optionalen Schritt 53 wird die relative Lage der aufgenommenen Merkmale 13 zueinander ermittelt und mit der relativen Lage der Merkmale, die aus dem oben genannten Modell im Wesentlichen bekannt sind, zueinander verglichen. Bei Überschreiten einer Abweichung zwischen der relativen Lage der aufgenommenen Merkmale 13 und der relativen Lage der aus dem Modell im Wesentlichen bekannten Merkmalen wird in einer Variante der Erfindung eine Fehlermeldung ausgegeben. Im Falle der Fehlermeldung wird in einer Fortbildung der Erfindung das Objekt 12 gegen ein neues Objekt 12 ausgetauscht, so dass das Verfahren mit dem Schritt 50 fortgeführt wird, wie in Figur 1b exemplarisch gezeigt. Alternativ wird das Modell dem erfassten Objekt 12 angepasst. Somit ist es möglich, dass das beispielsweise mittels CAD gewonnene Modell den tatsächlichen Abmessungen des gegriffenen Objekts 12 angepasst wird. Dieses angepasste Modell bestimmt in diesem Fall die Endlage, welche das Objekt 12 einnehmen soll, im Raum-Koordinatensystem. Wird die Endlage beispielsweise durch einen Teilabschnitt des Objekts 12, insbesondere eine Kante, bestimmt, welche die Endlage einzunehmen hat, so wird eine Verformung des Teils durch Anpassung des Modells entsprechend berücksichtigt.

Im ebenfalls optionalen Schritt 54 wird der erste Industrieroboter 11 unter Berücksichtigung der ersten Abgleichgrösse von der ersten Abgleichstellung in eine Stellung verstellt, in welcher das erste Objekt 12 in einer ersten Annäherungslage nahe der ersten Endlage positioniert ist. Dies erfolgt, indem dem ersten Industrieroboter, dem bisher die erste Abgleichstellung vorgegeben wurde, eine neue Stellung als Eingangsgrösse vorgegeben wird, in welcher sich das erste Objekt 12 in der ersten Annäherungslage befindet. Die zwei Kameras 2ₐ, 2_{b} werden jeweils mittels der Antriebseinheit 3ₐ, 3_{b} mit sich zumindest teilweise überschneidenden Sichtfeldern 8ₐ, 8_{b} auf zumindest einen Teil der ersten Merkmale 13 des ersten Objekts 12, das nun in der ersten Annäherungslage positioniert ist, ausgerichtet.

Im Schritt 55 wird das erste Objekt 12 hochpräzise in die erste Endlage verstellt. Hierzu werden die folgenden Schritte solange wiederholt, bis die erste Endlage in einer vorgegebenen Toleranz erreicht ist. Zunächst werden weitere erste Bildaufnahmen mittels der Kameras 2ₐ und 2_{b} aufgenommen. Die aktuelle Lage des ersten Objekts 12 im Raum-Koordinatensystem wird wieder aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den weiteren ersten Bildaufnahmen und der Kenntnis der ersten Merkmale 13 auf dem ersten Objekt 12 bestimmt. Die aktuelle Lage wird nun mit der Solllage, also der ersten Endlage verglichen. Die Lagedifferenz zwischen der aktuellen Lage des ersten Objekts 12 und der ersten Endlage wird berechnet. Darauf folgend wird eine neue Sollstellung des ersten Industrieroboters 11 berechnet. Dies erfolgt unter Berücksichtigung der ersten Abgleichgrösse aus der aktuellen Stellung des ersten Industrieroboters 11 und einer mit der Lagedifferenz verknüpften Grösse. Die mit der Lagedifferenz verknüpfte Grösse ist vorzugsweise die mit einem Faktor kleiner oder gleich 1 multiplizierte Lagedifferenz. Dies bedeutet, dass die neue Sollstellung eine Stellung des Industrieroboters 11 ist, bei welcher sich das erste Objekt 12 in einer Lage zwischen der aktuellen Lage und der ersten Endlage befinden wird. Ist der Faktor gleich 1, ist die neue Sollstellung eine Stellung, in welcher das erste Objekt 12 von der aktuellen Lage in die erste Endlage annähernd gebracht wird, soweit dies mittels der unpräziseren Sensorik und Aktorik des Industrieroboters 11 möglich ist. Da diese jedoch regelmässig zu ungenau ist, um das erste Objekt 12 mittels nur eines Schritts 55 bis in die erste Endlage in der vorgegebenen Toleranz zu bringen, ist der Faktor vorzugsweise kleiner 1, vorzugsweise kleiner 0,95, insbesondere kleiner 0,9, beispielsweise kleiner 0,8, jedoch grösser 0. Mittels eines Faktors kleiner 1 aber grösser 0 ist die neue Sollstellung des Industrieroboters 11 derart, dass sich nach dem Verstellen des Industrieroboters 11 in die neue Sollstellung das erste Objekt 12 der ersten Endlage genähert, diese jedoch noch nicht ganz erreicht hat.

Der erste Industrieroboter 11 wird im Anschluss durch Vorgabe der neuen Sollstellung verstellt. In anderen Worten erhält der erste Industrieroboter eine neue Positions-Eingangsgrösse, aus welcher sich seine neue Sollstellung ergibt. Diese neue Sollstellung wird somit mittels der Sensorik und Aktorik des ersten Industrieroboters 11 angefahren. Im Anschluss wiederholen sich die genannten Schritte. Es werden also erneut weitere erste Bildaufnahmen mittels der Kameras 2ₐ und 2_{b} aufgenommen, anhand dieser die aktuelle Lage des ersten Objekts 12 bestimmt und die Lagedifferenz zwischen der aktuellen Lage des ersten Objekts 12 und der ersten Endlage berechnet. Liegt das erste Objekt wieder nicht innerhalb der geforderten Toleranz der ersten Endlage, wird dem ersten Industrieroboter 11 erneut eine neue Sollstellung vorgegeben, die sich aus seiner aktuellen Stellung und der mit der Lagedifferenz verknüpften Grösse unter Berücksichtigung der ersten Abgleichgrösse berechnet. Diese Schritte werden solange wiederholt, bis das erste Objekt 12 hochpräzise innerhalb der Toleranz die erste Endlage erreicht hat.

Ein wesentlicher Vorteil des beschriebenen Verfahrens besteht darin, dass das Erfassen der Lage des Objekts im Raum mittels einer sehr geringen Anzahl an Bildaufnahmen, die ausser den Merkmalen des Objekts keine weiteren Referenzmarken zeigen müssen, erfolgen kann, wodurch das Verfahren erheblich beschleunigt wird. Nach dem Verstellen des Sichtfelds der Kameras kann ohne Neureferenzierung die photogrammetrische Bildauswertung erfolgen. Dies ist insbesondere bei industriellen Anwendungen von Bedeutung, bei denen Objekte von Handhabungssystemen über grössere Strecken bewegt und im Anschluss präzise positioniert werden, da ein Ändern des Sichtfelds in Form eines Schwenkens der Kameras auf die Merkmale der Objekte weder eine erneute Referenzierung noch das Zurückgreifen auf zuvor gemessene Bilder und/oder Referenzmarkierungen erfordert. Somit ist ein schnelles, hochpräzises und prozesssicheres Positionieren gewährleistet. Weil das Schwenken der Kameras zu keinem Zeitverlust aufgrund Neureferenzierung oder Koppelorientierung führt, können die Aufnahmeeinrichtungen entfernt vom Prozess, insbesondere in 2 bis 5 Metern Entfernung, angeordnet sein, so dass der Prozess nicht beeinträchtigt wird und die Messtechnik nicht dem Prozess unmittelbar ausgesetzt ist. Dies ist insbesondere bei Schweissverfahren von Vorteil, da die sensible Messtechnik kaum beeinflusst wird.

Selbstverständlich ist es möglich, weitere Aufnahmeeinrichtungen zur Erhöhung der Positionsbestimmungsgenauigkeit einzusetzen. In diesem Fall überschneiden sich beispielsweise die drei Sichtfelder der drei Kameras.

Die mindestens zwei Aufnahmeeinrichtungen 1ₐ, 1_{b} sind in einer möglichen Variante derart ausgebildet, dass sich die horizontale Kippachse Hₐ bzw. H_{b} und die vertikale Stehachse Vₐ bzw. V_{b} im Wesentlichen schneiden und insbesondere das Projektionszentrum der Kamera 2ₐ bzw. 2_{b} jeweils im Schnittpunkt der horizontalen Kippachse Hₐ bzw. H_{b} und der vertikalen Stehachse Vₐ, V_{b} angeordnet ist. Somit ist die Position der Kamera 2ₐ bzw. 2_{b} jeweils unabhängig von der Winkelausrichtung αₐ, βₐ bzw. α_{b}, β_{b} mit der Position Pₐ bzw. P_{b} der Aufnahmeeinrichtung 1ₐ bzw. 1_{b} gekoppelt. In anderen Worten schneidet in diesem Fall die optische Achse der Kamera 2ₐ bzw. 2_{b} in jeder Ausrichtung den Schnittpunkt der horizontale Kippachse Hₐ bzw. H_{b} und die vertikale Stehachse Vₐ bzw. V_{b}. Das Bestimmen der Lage im Raum-Koordinatensystem erfolgt somit aus den Positionen der Kameras 2ₐ, 2_{b}, den durch die Winkelmesseinheiten 4ₐ, 4_{b} erfassten Winkelausrichtungen αₐ, βₐ; α_{b}, β_{b} der Kameras 2ₐ, 2_{b}, den Bildaufnahmen und der Kenntnis der Merkmale 13.

In einer anderen möglichen Variante sind die mindestens zwei Aufnahmeeinrichtungen 1ₐ, 1_{b} jeweils derart ausgebildet, dass das Projektionszentrum der Kamera 2ₐ bzw. 2_{b} jeweils ausserhalb des Schnittpunkts der horizontalen Kippachse Hₐ bzw. H_{b} und der vertikalen Stehachse Vₐ bzw. V_{b} angeordnet ist. In anderen Worten schneidet die optische Achse der Kamera 2ₐ bzw. 2_{b} nicht den Schnittpunkt der Achsen. Die Positionen der Kameras 2ₐ, 2_{b} werden jeweils aus der vorgegebenen Exzentrizität des Projektionszentrums der Kamera 2ₐ bzw. 2_{b} von dem Schnittpunkt, den Winkelausrichtungen αₐ, βₐ; α_{b}, β_{b} und den Positionen Pₐ, P_{b} der Aufnahmeeinrichtungen 1ₐ, 1_{b} bestimmt. Die Lage im Raum-Koordinatensystem wird dann aus den Positionen Pₐ, P_{b} der Aufnahmeeinrichtungen 1ₐ, 1_{b}, den Exzentrizitäten der Projektionszentren der Kameras 2ₐ, 2_{b}, den durch die Winkelmesseinheiten 4ₐ, 4_{b} erfassten Winkelausrichtungen der Kameras 2ₐ, 2_{b}, den Bildaufnahmen und der Kenntnis der Merkmale 12 bestimmt.

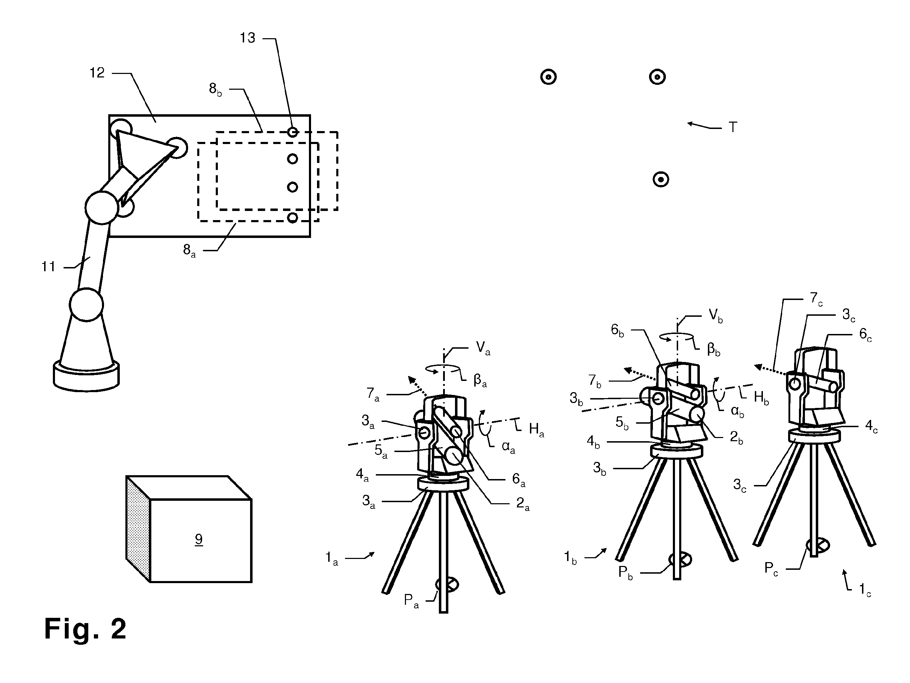

Figur 2 zeigt eine Weiterbildung der Erfindung, wobei auf die bereits erläuterten Merkmale des Ausführungsbeispiels aus Figur 1a nicht erneut eingegangen wird.

In dem Ausführungsbeispiel der Figur 2 besitzt die Aufnahmeeinrichtungen 1ₐ einen ersten Emitter 6ₐ, der zum Emittieren eines ersten strukturierten Lichts 7ₐ innerhalb des ersten Sichtfelds 8ₐ der ersten Kamera 2ₐ ausgebildet ist. Der erste Emitter 6ₐ ist gemeinsam mit der ersten Kamera 2ₐ mittels der ersten Antriebseinheit 3ₐ ausrichtbar. Die Winkelausrichtung kann mittels der im Raum-Koordinatensystem kalibrierten ersten Winkelmesseinheit 4ₐ hochpräzise erfasst werden. Im oben beschriebenen Schritt des Aufnehmens der Bildaufnahmen wird das erste strukturierte Licht 7ₐ vom dem ersten Emitter 6ₐ derart auf das Objekt 12 projiziert, dass das erste strukturierte Licht 7ₐ im Sichtfeld der zweiten Kamera 2_{b} der zweiten Aufnahmeeinrichtung 1_{b} liegt. Das Bestimmen der Lage des Objekts 12 im Raum-Koordinatensystem erfolgt zusätzlich aus den Positionen Pₐ, P_{b} der Aufnahmeeinrichtungen 1ₐ, 1_{b}, der durch die Winkelmesseinheiten 4ₐ, 4_{b} erfassten Winkelausrichtungen des ersten Emitters 6ₐ und der zweiten Kamera 2_{b} und den das erste strukturierte Licht 7ₐ abbildenden Bildaufnahmen der zweiten Kamera 2_{b} mittels Triangulation. Hierdurch lässt sich die Positionsbestimmungsgenauigkeit erhöhen. Weiters ist es möglich, selbst auf einem Abschnitt eines Objekts, der keine optisch erfassbaren Markierungen aufweist, Messungen durchzuführen.

Auch die zweite Aufnahmeeinrichtung 1_{b} besitzt einen Emitter, nämlich den zweiten Emitter 6_{b}, der zum Emittieren eines zweiten strukturierten Lichts 7_{b} innerhalb des zweiten Sichtfelds 8_{b} der zweiten Kamera 2_{b} ausgebildet ist. Dieser ist gemeinsam mit der zweiten Kamera 2_{b} mittels der zweiten Antriebseinheit 3_{b} ausrichtbar. Die Winkelausrichtung des zweiten Emitters 6_{b} ist mittels der im Raum-Koordinatensystem kalibrierten zweiten Winkelmesseinheit 4_{b} hochpräzise erfassbar. Im oben beschriebenen Schritt des Aufnehmens der Bildaufnahmen wird das zweite strukturierte Licht 7_{b} von dem zweiten Emitter 6_{b} derart auf zumindest den Teil der Merkmale 13 des Objekts 12 projiziert, dass das zweite strukturierte Licht 7_{b} im Sichtfeld der ersten Kamera 2ₐ der ersten Aufnahmeeinrichtung 1ₐ liegt. Die Lage des Objekts 12 im Raum-Koordinatensystem wird zusätzlich aus den Positionen Pₐ, P_{b} der Aufnahmeeinrichtungen 1ₐ, 1_{b}, der durch die Winkelmesseinheiten 4ₐ, 4_{b} erfassten Winkelausrichtungen des zweiten Emitters 6_{b} und der ersten Kamera 2ₐ sowie den das zweite strukturierte Licht 7_{b} abbildenden Bildaufnahmen der ersten Kamera 2ₐ und der Kenntnis der Merkmale 13 auf dem Objekt 12 mittels Triangulation bestimmt.

Weiters ist in einer bekannten dritten Position P_{c} und mit einer bekannten Ausrichtung eine Emissionseinrichtung 1_{c} angeordnet, die einen dritten Emitter 6_{c} aufweist. Dieser dritte Emitter 6_{c} ist zum Emittieren eines dritten strukturierten Lichts 7_{c} ausgebildet und mittels einer dritten Antriebseinheit 3_{c} ausrichtbar. Die Winkelausrichtung des dritten Emitters 6_{c} kann mittels einer im Raum-Koordinatensystem kalibrierten dritten Winkelmesseinheit 4_{c} hochpräzise erfasst werden. Im oben beschriebenen Schritt des Aufnehmens der Bildaufnahmen wird das dritte strukturierte Licht 7_{c} vom dem dritten Emitter 6_{c} derart auf das Objekt 12 projiziert, dass das dritte strukturierte Licht 7_{c} im Sichtfeld der ersten Kamera 2ₐ der ersten Aufnahmeeinrichtung 1a und/oder der zweiten Kamera 2_{b} liegt. Das Bestimmen der Lage des Objekts 12 im Raum-Koordinatensystem erfolgt zusätzlich aus der Position Pₐ der ersten Aufnahmeeinrichtung 1ₐ, der durch die erste Winkelmesseinheit 4ₐ erfassten Winkelausrichtung der ersten Kamera 2ₐ, der durch die dritte Winkelmesseinheit 4_{c} erfassten Winkelausrichtung des dritten Emitters 6_{c} und den das dritte strukturierte Licht 7_{c} abbildenden Bildaufnahmen der ersten Kamera 2ₐ mittels Triangulation. Ein Vorteil der Verwendung der Emissionseinrichtung 1_{c} besteht darin, dass durch entsprechende, insbesondere seitlich versetzte Positionierung eine günstige Triangulationsbasis geschaffen wird, die es ermöglicht, die Messgenauigkeit beim Bestimmen der Lage des Objekts weiter zu erhöhen.

Es ist möglich, nur eine einzige Aufnahmeeinrichtung oder mehrere Aufnahmeeinrichtungen mit einer Emissionseinheit auszustatten. Das jeweils strukturierte Licht 7a, 7b, 7c ist beispielsweise eine projizierte Laserlinie, ein in Form einer Laserlinie gefächert projizierter Laserpunkt oder ein zweidimensional projiziertes Muster, insbesondere ein Laserraster.

Die beiden Aufnahmeeinrichtungen 1ₐ und 1_{b} besitzen im Ausführungsbeispiel von Figur 2 weiters Laserdistanzmesser 5ₐ bzw. 5_{b}, die gemeinsam mit der ersten Kamera 2ₐ bzw. 2_{b} mittels der jeweiligen Antriebseinheit 3ₐ bzw. 3_{b} ausrichtbar sind und deren Winkelausrichtungen mittels der im Raum-Koordinatensystem kalibrierten Winkelmesseinheit 4ₐ bzw. 4_{b} hochpräzise erfassbar sind. Diese Laserdistanzmesser 5ₐ bzw. 5_{b} werden ebenfalls zusätzlich zur Bestimmung der Lage des Objekts 12 im Raum-Koordinatensystem mit erhöhter Genauigkeit durch Zielen auf die Merkmale 13 auf dem Objekt 12 herangezogen. Weiters ist es möglich, die Positionen Pₐ und P_{b} der Aufnahmeeinrichtungen 1ₐ im Raum-Koordinatensystem durch Zielen auf ortsfeste Zielmarken T mittels der Laserdistanzmessers 5ₐ und/oder 5_{b} zu bestimmen. Die Laserdistanzmesser 5ₐ bzw. 5_{b} können alternativ als Laserscanner ausgebildet sein, die insbesondere über das gesamte Sichtfeld der jeweiligen Kamera messen. Die Laserdistanzmesser 5ₐ bzw. 5_{b} können also auch zusätzlich gegenüber der Kamera orientierbar sein, wobei diese Orientierung relativ zur jeweiligen Kamera gemessen werden kann. Hierdurch ist der Messstrahl messbar gegenüber der jeweiligen Kamera ausrichtbar.

Das oben dargestellte Positionierungsverfahren wurde für die freie Positionierung eines einzelnen ersten Objekts im Raum beschrieben. Es ist jedoch weiters möglich, mindestens ein zweites Objekt unter Zuhilfenahme der bereits beschriebenen Verfahren und Komponenten zu positionieren und/oder das erste Objekt relativ zum zweiten Objekt, und umgekehrt, hochpräzise auszurichten. Derartige Verfahren werden im Folgenden beschrieben. Es ist ebenfalls realisierbar, die oben beschrieben Merkmale auch mit der Positionierung des zweiten Objekts und jedes weiteren Objekts zu kombinieren. Zur einfacheren Darstellung wird jedoch darauf verzichtet, die bei der Positionierung des ersten Objekts möglichen Weiterbildungen auch für die Positionierung der weiteren Objekte zu beschreiben. Diese Kombinationen sind jedoch ebenfalls Bestandteil dieser Erfindung.

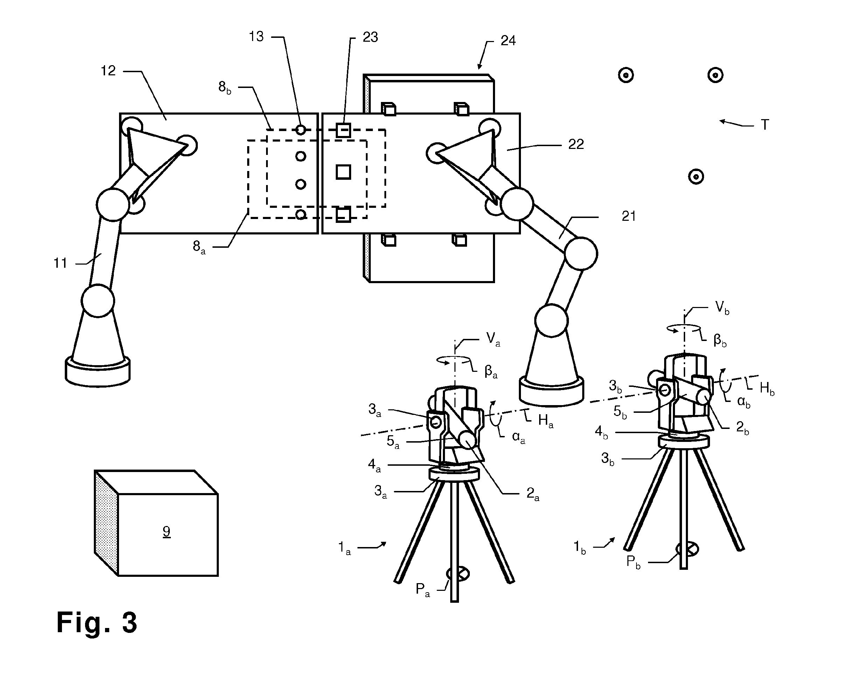

Eine solche Weiterbildung zeigt Figur 3. Neben den wesentlichen Komponenten der Ausführungsform aus Figur 1a, auf welche hier nicht erneut eingegangen wird, sind ein zweiter Industrieroboter 21 und eine Objekthalterung 24 vorgesehen. Vor dem hochpräzisen Verstellen des ersten Objekts 12 in die erste Endlage, wie oben beschrieben, wird ein zweites Objekt 22 von dem zweiten Industrieroboter 21 gegriffen und in die Objekthalterung 24 platziert. Die Objekthalterung 24 ist als so genannte "Fixture" ausgebildet, die das zweite Objekt 22 aufnehmen kann. Hierzu ist es möglich, dass die Objekthalterung 24 eine entsprechende Form - beispielsweise zum Vermeiden einer Deformation des Objekts - aufweist und/oder entsprechende Spannvorrichtungen zum Fixieren des Objekts hat. Nach dem Platzieren in der Objekthalterung 24 befindet sich das zweite Objekt 22 in einer zweiten Endlage im Raum-Koordinatensystem. Alternativ ist es möglich, das zweite Objekt nicht mittels eines zweiten Industrieroboters 21 sondern manuell in der Objekthalterung 24 zu platzieren. In einer Ausführungsvariante ist die Objekthalterung 24 derart zwangszentrierend ausgebildet, dass das zweite Objekt 22 hochpräzise in der vorgegebenen zweiten Endlage platziert wird. Ein Erfassen der zweiten Endlage mittels Messtechnik kann in diesem Fall entfallen. Ist dies jedoch nicht der Fall, so wird die zweite Endlage im Raum-Koordinatensystem bestimmt. Das zweite Objekt 22 weist hierzu bekannte optisch erfassbare zweite Merkmale 23 auf. Nach dem Platzieren des zweiten Objekts 22 in der Objekthalterung 24 wird die zweite Endlage des zweiten Objekts 22 im Raum-Koordinatensystem bestimmt, indem zunächst die mindestens zwei Kameras 2ₐ, 2_{b} jeweils mittels der Antriebseinheit 3ₐ, 3_{b} mit sich zumindest teilweise überschneidenden Sichtfeldern 8ₐ, 8_{b} auf zumindest einen Teil der zweiten Merkmale 23 des zweiten Objekts 22 ausgerichtet werden. Zweite Bildaufnahmen werden aufgenommen. Die zweite Endlage des zweiten Objekts 22 im Raum-Koordinatensystem wird nun bestimmt aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den zweiten Bildaufnahmen und der Kenntnis der zweiten Merkmale 23 auf dem zweiten Objekt 22.

Alternativ wird vor dem hochpräzisen Verstellen des ersten Objekts 12 in die erste Endlage Eₐ das zweite Objekt 22 von dem zweiten Industrieroboter 21 innerhalb einer Greiftoleranz gegriffen, nicht in die Objekthalterung 24 gelegt sondern gehalten. Der zweite Industrieroboter 21 wird in eine Endstellung des zweiten Industrieroboters 21 verstellt, in welcher sich das zweite Objekt 22 in der zweiten Endlage befindet. Die zweite Endlage des zweiten Objekts 22 wird im Raum-Koordinatensystem bestimmt durch folgende Schritte: Ausrichten der mindestens zwei Kameras 2ₐ, 2_{b} jeweils mittels der Antriebseinheit 3ₐ, 3_{b} mit sich zumindest teilweise überschneidenden Sichtfeldern 8ₐ, 8_{b} auf zumindest einen Teil der zweiten Merkmale 23 des zweiten Objekts 22. Aufnehmen zweiter Bildaufnahmen. Bestimmen der zweiten Endlage des zweiten Objekts 22 im Raum-Koordinatensystem aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den zweiten Bildaufnahmen und der Kenntnis der zweiten Merkmale 23 auf dem zweiten Objekt 22.

Die erste Endlage für das erste Objekt 12 wird in diesen Fällen der Figur 3 aus der zweiten Endlage des zweiten Objekts 22 und einer vorgegebenen Relativlage zwischen dem ersten Objekt 12 und dem zweiten Objekt 22 berechnet. Da das erste Objekt 12 hochpräzise relativ zum zweiten Objekt 22 positioniert ist, kann nun beispielsweise ein Fügeverfahren zum präzisen Verbinden der beiden Objekte durchgeführt werden.

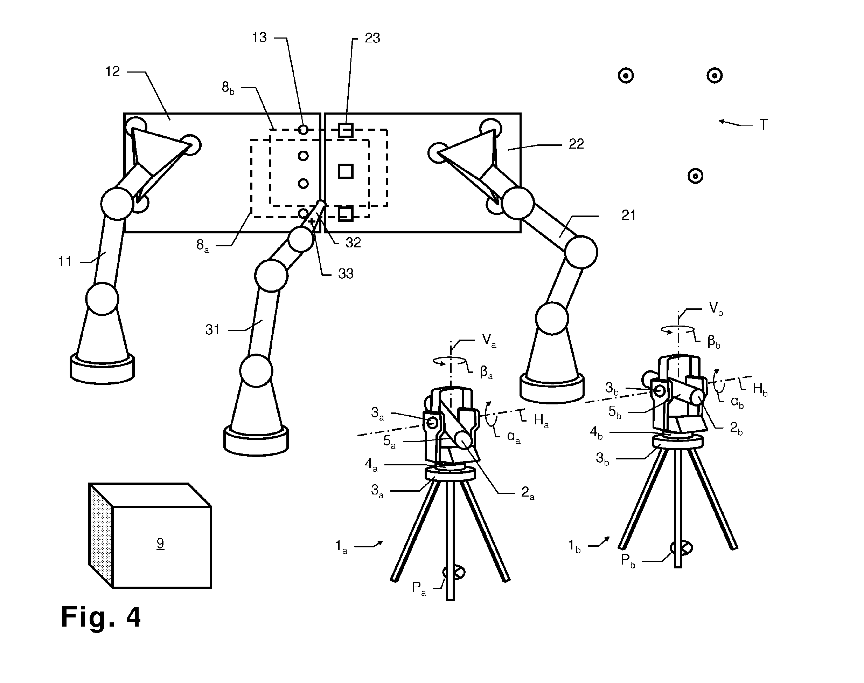

In Figur 4 ist eine weitere Ausführungsform der Erfindung gezeigt, bei welcher ein zweites Objekt 22 sowie ein drittes Objekt 32, das als Bearbeitungswerkzeug ausgebildet ist, hochpräzise verstellt werden.

Das zweite Objekt 22, das bekannte optisch erfassbare zweite Merkmale 23 hat, wird von einem zweiten Industrieroboter 21 innerhalb einer Greiftoleranz gegriffen und gehalten. Eine die Greiftoleranz korrigierende zweite Abgleichgrösse wird für den zweiten Industrieroboter 21 bestimmt, so dass das zweite Objekt 22 im Raum-Koordinatensystem durch Vorgabe einer Stellung des zweiten Industrieroboters 21 abgeglichen verstellbar ist. Das Bestimmen der zweiten Abgleichgrösse erfolgt durch Ausrichten der zwei Kameras 2ₐ, 2_{b} jeweils mittels der Antriebseinheit 3ₐ, 3_{b} mit sich zumindest teilweise überschneidenden Sichtfeldern auf zumindest einen Teil der zweiten Merkmale 23 des zweiten Objekts 22, das in einer zweiten Abgleichstellung des zweiten Industrieroboters 21 gehaltenen wird. Es werden zweite Bildaufnahmen aufgenommen. Die Lage des zweiten Objekts 22 im Raum-Koordinatensystem in der zweiten Abgleichstellung des zweiten Industrieroboters 21 wird bestimmt aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den zweiten Bildaufnahmen und der Kenntnis der zweiten Merkmale 23 auf dem zweiten Objekt 22. Die zweite Abgleichgrösse wird bestimmt durch Heranziehen der zweiten Abgleichstellung des zweiten Industrieroboters 21 und zumindest der bestimmten Lage des zweiten Objekts 22 in der zweiten Abgleichstellung des zweiten Industrieroboters 21. Im Anschuss wird das zweite Objekt 22 hochpräzise in eine zweite Endlage verstellt. Dies geschieht durch die sich bis zum Erreichen der zweiten Endlage in einer vorgegebenen Toleranz wiederholenden folgenden Schritte. Zunächst werden weitere zweite Bildaufnahmen aufgenommen. Die aktuelle Lage des zweiten Objekts 22 im Raum-Koordinatensystem wird bestimmt aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den weiteren zweiten Bildaufnahmen und der Kenntnis der zweiten Merkmale 23 auf dem zweiten Objekt 22. Die Lagedifferenz zwischen der aktuellen Lage des zweiten Objekts 22 und der zweiten Endlage wird berechnet. Nach dem Berechnen einer neuen Sollstellung des zweiten Industrieroboters 21 unter Berücksichtigung der zweiten Abgleichgrösse aus der aktuellen Stellung des zweiten Industrieroboters 21 und einer mit der Lagedifferenz verknüpften Grösse wird der zweite Industrieroboter 21 in die neue Sollstellung verstellt. Diese Schritte werden wiederholt, bis das zweite Objekt 22 die zweite Endlage in der vorgegebenen Toleranz erreicht hat.

Anstelle einer relativen Positionierung der beiden Objekte 12 und 22 gemäss Figur 3 werden also in dieser Ausführungsform der Figur 4 beide Objekte 12 und 22 unabhängig voneinander hochpräzise einzeln positioniert.

In einer Weiterbildung der Erfindung wird nach dem Greifen des zweiten Objekts 22 der zweite Industrieroboter 21 in die zweite Abgleichstellung des zweiten Industrieroboters 21 zum Bestimmen der zweiten Abgleichgrösse verstellt.

Eine weitere Ausführungsvariante der Erfindung sieht vor, dass vor den sich bis zum Erreichen der zweiten Endlage in einer vorgegebenen Toleranz wiederholenden Schritten der zweite Industrieroboter 21 unter Berücksichtigung der zweiten Abgleichgrösse von der zweiten Abgleichstellung in eine Stellung verstellt wird, in welcher das zweite Objekt 22 in einer zweiten Annäherungslage nahe der zweiten Endlage positioniert ist. Im Anschluss werden die zwei Kameras 2ₐ, 2_{b} jeweils mittels der Antriebseinheit 3ₐ, 3_{b} mit sich zumindest teilweise überschneidenden Sichtfeldern 8ₐ, 8_{b} auf zumindest einen Teil der zweiten Merkmale 23 des zweiten Objekts 22, das in der zweiten Annäherungslage positioniert ist, ausgerichtet.

Wie ebenfalls in Figur 4 veranschaulicht, jedoch auch bei der Ausführungsform von Figur 3 möglich, ist ein als Bearbeitungswerkzeug ausgebildetes drittes Objekt 32 vorgesehen. Das Bearbeitungswerkzeug 32 wird von einem dritten Industrieroboter 31 innerhalb einer Haltetoleranz gehalten. Das Bearbeitungswerkzeug 32 oder ein hierzu gekoppeltes Teil des dritten Industrieroboters 31, beispielsweise die Aufnahme des Bearbeitungswerkzeugs 32, weist bekannte optisch erfassbare dritte Merkmale 33 auf. Um das Bearbeitungswerkzeug 32 im Raum-Koordinatensystem durch Vorgabe einer Stellung des dritten Industrieroboters 31 abgeglichen verstellen zu können, wird eine die Haltetoleranz korrigierende dritte Abgleichgrösse für den dritten Industrieroboter 31 bestimmt. Hierzu werden zunächst die zwei Kameras 2ₐ und 2_{b} jeweils mittels der Antriebseinheit 3ₐ und 3_{b} mit sich zumindest teilweise überschneidenden Sichtfeldern 8ₐ, 8_{b} auf zumindest einen Teil der dritten Merkmale 33 ausgerichtet. Das Bearbeitungswerkzeug 32 wird hierbei in einer dritten Abgleichstellung des dritten Industrieroboters 31 gehaltenen. Dritte Bildaufnahmen werden aufgenommen. Die Lage des Bearbeitungswerkzeugs 32 im Raum-Koordinatensystem in der dritten Abgleichstellung des dritten Industrieroboters 31 wird bestimmt aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den dritten Bildaufnahmen und der Kenntnis der dritten Merkmale 33. Das Bestimmen der dritten Abgleichgrösse erfolgt durch Heranziehen der dritten Abgleichstellung des dritten Industrieroboters 31 und zumindest der bestimmten Lage des Bearbeitungswerkzeugs 32 in der dritten Abgleichstellung des dritten Industrieroboters 31.

Weiters sieht die Erfindung vor, dass das Bearbeitungswerkzeug 32 hochpräzise in eine dritte Endlage verstellt wird durch die folgenden, sich bis zum Erreichen der dritten Endlage in einer vorgegebenen Toleranz wiederholenden Schritte. Weitere dritte Bildaufnahmen werden aufgenommen. Die aktuelle Lage des Bearbeitungswerkzeugs 32 im Raum-Koordinatensystem wird bestimmt aus den Positionen Pₐ, P_{b} der Aufnahmeeinrichtungen 1ₐ, 1_{b}, den durch die Winkelmesseinheiten 4ₐ, 4_{b} erfassten Winkelausrichtungen der Kameras 2ₐ, 2_{b}, den weiteren dritten Bildaufnahmen und der Kenntnis der dritten Merkmale 33. Die Lagedifferenz zwischen der aktuellen Lage des dritten Objekts 32 und der dritten Endlage wird berechnet. Eine neue Sollstellung des dritten Industrieroboters 31 wird unter Berücksichtigung der dritten Abgleichgrösse aus der aktuellen Stellung des dritten Industrieroboters 21 und einer mit der Lagedifferenz verknüpften Grösse berechnet. Im Anschluss wird der dritte Industrieroboter 31 in die neue Sollstellung verstellt. Diese Schritte werden solange wiederholt, bis sich das Bearbeitungswerkzeug 32 im Toleranzbereich der dritten Endlage befindet.

Das Bearbeitungswerkzeug 32 ist beispielsweise ein Schweisswerkzeug zum fügenden Schweissen des ersten Objekts 12 und des zweiten Objekts 22. Beliebige andere Bearbeitungswerkzeuge, insbesondere Fügewerkzeuge, sind ebenfalls verwendbar. Auch wenn an dieser Stelle ein Bearbeitungswerkzeug 32 in Kombination mit einem ersten Objekt 12 und einem zweiten Objekt 22, insbesondere zum Fügen dieser Objekt, beschrieben wurde, umfasst die Erfindung ebenfalls das Positionieren des Bearbeitungswerkzeugs relativ zu lediglich einem Objekt. Dies kann beispielsweise bei einem Bearbeitungswerkzeug, das einen Arbeitsschritt, beispielsweise einen spanenden Fertigungsschritt, an lediglich einem Objekt durchführt, der Fall sein.

Die Erfindung umfasst auch die Kombinationen nicht explizit kombinierter Merkmale.

Die beschriebenen Systemkomponenten, insbesondere die Messkomponenten wie die Aufnahmeeinrichtungen, zeichnen sich durch ihre Mobilität und Flexibilität aus. Es ist somit möglich, das beschrieben Verfahren mittels eigenständiger Komponenten, die innerhalb verhältnismässig kurzer Zeit in einem Fertigungssystem installiert werden können, durchzuführen. Durch selbstkalibrierende und selbstreferenzierende Komponenten ist es möglich, selbst unter erschwerten Betriebsbedingungen eine ausreichende Prozesssicherheit zu gewährleisten. Selbst verhältnismässig unpräzise Handhabungssysteme mit relativ ungenauen Messsystemen können aufgrund der Bestimmung von Abgleichgrössen und sich bis zum Erreichen der Endlage wiederholender Schritte zum hochpräzisen Positionieren von Objekten verwendet werden. Die Erfindung ermöglicht es, ohne unmittelbare Prozessbeteiligung berührungslos und ausreichend beabstandet eine rasche Erfassung der Lage der Objekte innerhalb eines sehr grossen Erfassungsbereichs durchzuführen. Ein Schwenken der Kameras führt zu keiner Verzögerung des Messvorgangs, die durch erneute Referenzierung der Kameras bedingt ist, da ein erneutes Referenzieren erfindungsgemäss entfallen kann. Somit zeichnet sich das erfindungsgemässe Verfahren und System zum hochpräzisen Positionieren von Objekten im Raum durch eine hohe Prozessgeschwindigkeit aus.

## Patentansprüche

1. Verfahren zum hochpräzisen Positionieren mindestens eines Objekts in eine Endlage im Raum mittels eines Industrieroboters, mit
• einem in vorgebbare Stellungen verstellbaren ersten Industrieroboter (11) und
• einer ersten optischen Aufnahmeeinrichtung (1ₐ), die in einem dreidimensionalen Raum-Koordinatensystem kalibriert und in einer bekannten ersten Position (Pₐ) mit einer bekannten Ausrichtung positioniert ist, mit
□ einer optisch kalibrierten ersten Kamera (2ₐ) zur Bildaufnahme innerhalb eines bestimmten ersten Sichtfelds (8ₐ),
□ einer ersten Antriebseinheit (3ₐ) zum - ein Verstellen des ersten Sichtfelds (8ₐ) bewirkenden - Ausrichten der ersten Kamera (2ₐ) und
□ einer im Raum-Koordinatensystem kalibrierten ersten Winkelmesseinheit (4ₐ) zum hochpräzisen Erfassen der Winkelausrichtung der ersten Kamera (2ₐ), so dass das erste Sichtfeld (8ₐ) im Raum-Koordinatensystem bestimmbar ist,
• mindestens einer zweiten optischen Aufnahmeeinrichtung (1_{b}), die in dem dreidimensionalen Raum-Koordinatensystem kalibriert und in einer bekannten zweiten Position (P_{b}) mit einer bekannten Ausrichtung positioniert ist, mit
□ einer optisch kalibrierten zweiten Kamera (2_{b}) zur Bildaufnahme innerhalb eines bestimmten zweiten Sichtfelds (8_{b}),
□ einer zweiten Antriebseinheit (3_{b}) zum - ein Verstellen des zweiten Sichtfelds (8_{b}) bewirkenden - Ausrichten der zweiten Kamera (2_{b}) und
□ einer im Raum-Koordinatensystem kalibrierten zweiten Winkelmesseinheit (4_{b}) zum hochpräzisen Erfassen der Winkelausrichtung der zweiten Kamera (2_{b}), so dass das zweite Sichtfeld (8_{b}) im Raum-Koordinatensystem bestimmbar ist,
wobei die mindestens zwei Positionen (Pₐ, P_{b}) derart beabstandet sind, dass eine dreidimensionale Bildaufnahme des mindestens einen Objekts mittels der mindestens zwei Aufnahmeeinrichtungen (1ₐ, 1_{b}) durch zumindest teilweise überscheidende Sichtfelder (8ₐ, 8_{b}) ermöglicht ist,
wobei
• ein erstes Objekt (12), das bekannte optisch erfassbare erste Merkmale aufweist (13), von dem ersten Industrieroboter (11) innerhalb einer Greiftoleranz gegriffen wird und gehalten wird,
• eine derartige, die Greiftoleranz korrigierende erste Abgleichgrösse für den ersten Industrieroboter (11) bestimmt wird, dass das erste Objekt (12) im Raum-Koordinatensystem durch Vorgabe einer Stellung des ersten Industrieroboters (11) abgeglichen verstellbar ist, wobei das Bestimmen der ersten Abgleichgrösse erfolgt durch die Schritte
□ Ausrichten der mindestens zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der ersten Merkmale (13) des ersten Objekts (12), das in einer ersten Abgleichstellung des ersten Industrieroboters (11) gehaltenen wird,
□ Aufnehmen erster Bildaufnahmen,
□ Bestimmen der Lage des ersten Objekts (12) im Raum-Koordinatensystem in der ersten Abgleichstellung des ersten Industrieroboters (11) aus
den Positionen (Pₐ, P_{b}) der Aufnahmeeinrichtungen (1ₐ, 1_{b}),
den durch die Winkelmesseinheiten (4ₐ, 4_{b}) erfassten Winkelausrichtungen der Kameras (2ₐ, 2_{b}),
den ersten Bildaufnahmen und
der Kenntnis der ersten Merkmale (13) auf dem ersten Objekt (12),
und
□ Bestimmen der ersten Abgleichgrösse durch Heranziehen der ersten Abgleichstellung des ersten Industrieroboters (11) und zumindest der bestimmten Lage des ersten Objekts (12) in der ersten Abgleichstellung des ersten Industrieroboters (11)
und
• das erste Objekt (12) hochpräzise in eine erste Endlage verstellt wird durch die sich bis zum Erreichen der ersten Endlage in einer vorgegebenen Toleranz wiederholenden Schritte
□ Aufnehmen weiterer erster Bildaufnahmen,
□ Bestimmen der aktuellen Lage des ersten Objekts (12) im Raum-Koordinatensystem aus
den Positionen (Pₐ, P_{b}) der Aufnahmeeinrichtungen (1ₐ, 1_{b}),
den durch die Winkelmesseinheiten (4ₐ, 4_{b}) erfassten Winkelausrichtungen der Kameras (2ₐ, 2_{b}),
den weiteren ersten Bildaufnahmen und
der Kenntnis der ersten Merkmale (13) auf dem ersten Objekt (12),
□ Berechnen der Lagedifferenz zwischen der aktuellen Lage des ersten Objekts (12) und der ersten Endlage,
□ Berechnen einer neuen Sollstellung des ersten Industrieroboters (11) unter Berücksichtigung der ersten Abgleichgrösse aus
der aktuellen Stellung des ersten Industrieroboters (11) und
einer mit der Lagedifferenz verknüpften Grösse,
und
□ Verstellen des ersten Industrieroboters (11) in die neue Sollstellung.

2. Verfahren nach Anspruch 1, wobei nach dem Greifen des ersten Objekts (12) der erste Industrieroboter (11) in die erste Abgleichstellung des ersten Industrieroboters (11) zum Bestimmen der ersten Abgleichgrösse verstellt wird.

3. Verfahren nach Anspruch 1 oder 2, wobei vor den sich bis zum Erreichen der ersten Endlage in einer vorgegebenen Toleranz wiederholenden Schritten
• der erste Industrieroboter (11) unter Berücksichtigung der ersten Abgleichgrösse von der ersten Abgleichstellung in eine Stellung verstellt wird, in welcher das erste Objekt (12) in einer ersten Annäherungslage nahe der ersten Endlage positioniert ist, und
• die zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der ersten Merkmale (13) des ersten Objekts (12), das in der ersten Annäherungslage positioniert ist, ausgerichtet werden.

4. Verfahren nach einem der Ansprüche 1 bis 3, wobei vor dem hochpräzisen Verstellen des ersten Objekts (12) in die erste Endlage
• ein zweites Objekt (22) von einem zweiten Industrieroboter (21) oder manuell gegriffen und in eine Objekthalterung (24) in einer zweiten Endlage im Raum-Koordinatensystem platziert wird.

5. Verfahren nach Anspruch 4, wobei
• die Objekthalterung (24) derart zwangszentrierend ausgebildet ist, dass das zweite Objekt (22) hochpräzise in der vorgegebenen zweiten Endlage platziert wird.

6. Verfahren nach Anspruch 4, wobei
• das zweite Objekt (22) bekannte optisch erfassbare zweite Merkmale (23) aufweist,
und nach dem Platzieren des zweiten Objekts (22) in der Objekthalterung (24)
• die zweite Endlage des zweiten Objekts (22) im Raum-Koordinatensystem bestimmt wird durch die Schritte
□ Ausrichten der mindestens zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der zweiten Merkmale (23) des zweiten Objekts (22),
□ Aufnehmen zweiter Bildaufnahmen und
□ Bestimmen der zweiten Endlage des zweiten Objekts (22) im Raum-Koordinatensystem aus
den Positionen (Pₐ, P_{b}) der Aufnahmeeinrichtungen (1ₐ, 1_{b}),
den durch die Winkelmesseinheiten (4ₐ, 4_{b}) erfassten Winkelausrichtungen der Kameras (2ₐ, 2_{b}), den zweiten Bildaufnahmen und
der Kenntnis der zweiten Merkmale (23) auf dem zweiten Objekt (22).

7. Verfahren nach einem der Ansprüche 1 bis 3, wobei vor dem hochpräzisen Verstellen des ersten Objekts (12) in die erste Endlage (Eₐ)
• ein zweites Objekt (22), das bekannte optisch erfassbare zweite Merkmale (23) aufweist, von einem zweiten Industrieroboter (21) innerhalb einer Greiftoleranz gegriffen wird und gehalten wird,
• der zweite Industrieroboter (21) in eine Endstellung des zweiten Industrieroboters (21) verstellt wird, in welcher sich das zweite Objekt (22) in einer zweiten Endlage befindet, und
• die zweite Endlage des zweiten Objekts (22) im Raum-Koordinatensystem bestimmt wird durch die Schritte
□ Ausrichten der mindestens zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der zweiten Merkmale (23) des zweiten Objekts (22),
□ Aufnehmen zweiter Bildaufnahmen und
□ Bestimmen der zweiten Endlage des zweiten Objekts (22) im Raum-Koordinatensystem aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den zweiten Bildaufnahmen und
· der Kenntnis der zweiten Merkmale (23) auf dem zweiten Objekt (22).

8. Verfahren nach einem der Ansprüche 5 bis 7, wobei
• die erste Endlage für das erste Objekt (12) aus der zweiten Endlage des zweiten Objekts (22) und einer vorgegebenen Relativlage zwischen dem ersten Objekt (12) und dem zweiten Objekt (22) berechnet wird.

9. Verfahren nach einem der Ansprüche 1 bis 3, wobei vor dem hochpräzisen Verstellen des ersten Objekts (12) in die erste Endlage
• ein zweites Objekt (22), das bekannte optisch erfassbare zweite Merkmale (23) aufweist, von einem zweiten Industrieroboter (21) innerhalb einer Greiftoleranz gegriffen wird und gehalten wird,
• eine derartige, die Greiftoleranz korrigierende zweite Abgleichgrösse für den zweiten Industrieroboter (21) bestimmt wird, dass das zweite Objekt (22) im Raum-Koordinatensystem durch Vorgabe einer Stellung des zweiten Industrieroboters (21) abgeglichen verstellbar ist, wobei das Bestimmen der zweiten Abgleichgrösse erfolgt durch die Schritte
□ Ausrichten der mindestens zwei Kameras (2ₐ, 2_{b}) jeweils mittels der Antriebseinheit (3ₐ, 3_{b}) mit sich zumindest teilweise überschneidenden Sichtfeldern auf zumindest einen Teil der zweiten Merkmale (23) des zweiten Objekts (22), das in einer zweiten Abgleichstellung des zweiten Industrieroboters (21) gehaltenen wird,
□ Aufnehmen zweiter Bildaufnahmen,
□ Bestimmen der Lage des zweiten Objekts (22) im Raum-Koordinatensystem in der zweiten Abgleichstellung des zweiten Industrieroboters (21) aus
· den Positionen (Pₐ, P_{b}) der Aufnahmeeinrichtungen (1ₐ, 1_{b}),
· en durch die Winkelmesseinheiten (4ₐ, 4_{b}) erfassten Winkelausrichtungen der Kameras (2ₐ, 2_{b}),
· den zweiten Bildaufnahmen und
· der Kenntnis der zweiten Merkmale (23) auf dem zweiten Objekt (22),
und
□ Bestimmen der zweiten Abgleichgrösse durch Heranziehen
· der zweiten Abgleichstellung des zweiten Industrieroboters (21) und
· zumindest der bestimmten Lage des zweiten Objekts (22) in der zweiten Abgleichstellung des zweiten Industrieroboters (21).
und
• das zweite Objekt (22) hochpräzise in eine zweite Endlage verstellt wird durch die sich bis zum Erreichen der zweiten Endlage in einer vorgegebenen Toleranz wiederholenden Schritte
□ Aufnehmen weiterer zweiter Bildaufnahmen,
□ Bestimmen der aktuellen Lage des zweiten Objekts (22) im Raum-Koordinatensystem aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den weiteren zweiten Bildaufnahmen und
· der Kenntnis der zweiten Merkmale (23) auf dem zweiten Objekt (22),
□ Berechnen der Lagedifferenz zwischen der aktuellen Lage des zweiten Objekts (22) und der zweiten Endlage,
□ Berechnen einer neuen Sollstellung des zweiten Industrieroboters (21) unter Berücksichtigung der zweiten Abgleichgrösse aus
· der aktuellen Stellung des zweiten Industrieroboters (21) und
· einer mit der Lagedifferenz verknüpften Grösse, und
□ Verstellen des zweiten Industrieroboters (21) in die neue Sollstellung.

10. Verfahren nach Anspruch 9, wobei
nach dem Greifen des zweiten Objekts (22) der zweite Industrieroboter (21) in die zweite Abgleichstellung des zweiten Industrieroboters (21) zum Bestimmen der zweiten Abgleichgrösse verstellt wird.

11. Verfahren nach Anspruch 9 oder 10, wobei
vor den sich bis zum Erreichen der zweiten Endlage in einer vorgegebenen Toleranz wiederholenden Schritten
• der zweite Industrieroboter (21) unter Berücksichtigung der zweiten Abgleichgrösse von der zweiten Abgleichstellung in eine Stellung verstellt wird, in welcher das zweite Objekt (22) in einer zweiten Annäherungslage nahe der zweiten Endlage positioniert ist, und
• die zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der zweiten Merkmale (23) des zweiten Objekts (22), das in der zweiten Annäherungslage positioniert ist, ausgerichtet werden.

12. Verfahren nach einem der Ansprüche 1 bis 11, wobei
• ein als Bearbeitungswerkzeug ausgebildetes drittes Objekt (32) von einem dritten Industrieroboter (31) innerhalb einer Haltetoleranz gehalten wird,
• das Bearbeitungswerkzeug (32) oder ein hierzu gekoppeltes Teil des dritten Industrieroboters (31) bekannte optisch erfassbare dritte Merkmale (33) aufweist und
• eine derartige, die Haltetoleranz korrigierende dritte Abgleichgrösse für den dritten Industrieroboter (31) bestimmt wird, dass das Bearbeitungswerkzeug (32) im Raum-Koordinatensystem durch Vorgabe einer Stellung des dritten Industrieroboters (31) abgeglichen verstellbar ist, wobei das Bestimmen der dritten Abgleichgrösse erfolgt durch die Schritte
□ Ausrichten der mindestens zwei Kameras (2ₐ, 2_{b}) jeweils mittels der Antriebseinheit (3ₐ, 3_{b}) mit sich zumindest teilweise überschneidenden Sichtfeldern (8ₐ, 8_{b}) auf zumindest einen Teil der dritten Merkmale (33), wobei das Bearbeitungswerkzeug (32) in einer dritten Abgleichstellung des dritten Industrieroboters (31) gehaltenen wird,
□ Aufnehmen dritter Bildaufnahmen,
□ Bestimmen der Lage des Bearbeitungswerkzeugs (32) im Raum-Koordinatensystem in der dritten Abgleichstellung des dritten Industrieroboters (31) aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den dritten Bildaufnahmen und
· der Kenntnis der dritten Merkmale (33),
und
□ Bestimmen der dritten Abgleichgrösse durch Heranziehen
· der dritten Abgleichstellung des dritten Industrieroboters (31) und
· zumindest der bestimmten Lage des Bearbeitungswerkzeugs (32) in der dritten Abgleichstellung des dritten Industrieroboters (31).

13. Verfahren nach Anspruch 12, wobei
• das Bearbeitungswerkzeug (32) hochpräzise in eine dritte Endlage verstellt wird durch die sich bis zum Erreichen der dritten Endlage in einer vorgegebenen Toleranz wiederholenden Schritte
□ Aufnehmen weiterer dritter Bildaufnahmen,
□ Bestimmen der aktuellen Lage des Bearbeitungswerkzeugs (32) im Raum-Koordinatensystem aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den weiteren dritten Bildaufnahmen und
· der Kenntnis der dritten Merkmale (33),
□ Berechnen der Lagedifferenz zwischen der aktuellen Lage des dritten Objekts (32) und der dritten Endlage,
□ Berechnen einer neuen Sollstellung des dritten Industrieroboters (31) unter Berücksichtigung der dritten Abgleichgrösse aus
· der aktuellen Stellung des dritten Industrieroboters (31) und
· einer mit der Lagedifferenz verknüpften Grösse, und
□ Verstellen des dritten Industrieroboters (31) in die neue Sollstellung.

14. Verfahren nach einem der Ansprüche 1 bis 13, wobei
die mit der Lagedifferenz verknüpfte Grösse von der mit einem Faktor kleiner oder gleich 1 multiplizierten Lagedifferenz gebildet wird.

15. Verfahren nach einem der Ansprüche 1 bis 14, wobei
• die Merkmale (13; 23; 33) im Wesentlichen aus einem durch eine elektronische Datenverarbeitungseinrichtung verarbeitbaren Modell bekannt sind,
• mittels auf einer elektronischen Datenverarbeitungseinrichtung ausgeführten Bildverarbeitung die Merkmale (13; 23; 33)
□ in dem Modell und/oder
□ in den Bildaufnahmen identifiziert und
□ die Merkmale (13; 23; 33) aus dem Modell sowie
□ die Merkmale (13; 23; 33) aus den Bildaufnahmen einander zugeordnet werden, und
• die Lage des Objekts (12; 22; 32) im Raum-Koordinatensystem aus
□ der erfassten Position der aufgenommenen Merkmale (13; 23; 33) im Raum-Koordinatensystem und
□ den zugeordneten Merkmalen (13; 23; 33) bestimmt wird.

16. Verfahren nach Anspruch 15, wobei
• die relative Lage der aufgenommenen Merkmale (13; 23; 33) zueinander ermittelt wird und mit der relativen Lage der aus dem Modell im Wesentlichen bekannten Merkmalen zueinander verglichen wird.

17. Verfahren nach Anspruch 16, wobei
• bei Überschreiten einer Abweichung zwischen der relativen Lage der aufgenommenen Merkmale (13; 23; 33) und der relativen Lage der aus dem Modell im Wesentlichen bekannten Merkmalen eine Fehlermeldung ausgegeben wird.

18. Verfahren nach Anspruch 17, wobei
• im Falle der Fehlermeldung das Objekt (12; 22; 32) gegen ein neues Objekt (12; 22; 32) ausgetauscht wird.

19. Verfahren nach Anspruch 16 oder 17, wobei
• das Modell dem erfassten Objekt (12; 22; 32) angepasst wird.

20. Verfahren nach Anspruch 19, wobei
• das angepasste Modell die Endlage im Raum-Koordinatensystem bestimmt.

21. Verfahren nach einem der Ansprüche 1 bis 20, wobei
die mindestens zwei Aufnahmeeinrichtungen (1ₐ, 1_{b}) jeweils derart ausgebildet sind, dass jeweils
• die Kamera (2ₐ; 2_{b}) mittels der Antriebseinheit (3ₐ; 3_{b}) um jeweils eine in Bezug auf das Raum-Koordinatensystem horizontale Kippachse (Hₐ; H_{b}) und eine vertikale Stehachse (Vₐ; V_{b}) ausrichtbar ist und
• durch die Winkelmesseinheit (4ₐ; 4_{b}) jeweils die horizontale Winkelausrichtung (αₐ; α_{b}) um die Stehachse (Vₐ; V_{b}) und die vertikale Winkelausrichtung (βₐ; β_{b}) um die Kippachse (Hₐ; H_{b}) im Raum-Koordinatensystem erfasst werden.

22. Verfahren nach Anspruch 21, wobei
sich die horizontale Kippachse (Hₐ, H_{b}) und die vertikale Stehachse (Vₐ; V_{b}) im Wesentlichen schneiden.

23. Verfahren nach Anspruch 22, wobei
die mindestens zwei Aufnahmeeinrichtungen (1ₐ, 1_{b}) jeweils derart ausgebildet sind, dass
• das Projektionszentrum der Kamera (2ₐ; 2_{b}) jeweils im Schnittpunkt der horizontalen Kippachse (Hₐ, H_{b}) und der vertikalen Stehachse (Vₐ, V_{b}) angeordnet ist,
• die Position der Kamera (2ₐ; 2_{b}) jeweils unabhängig von der Winkelausrichtung (αₐ, βₐ; α_{b}, β_{b}) mit der Position (Pₐ, P_{b}) der Aufnahmeeinrichtung (1ₐ, 1_{b}) gekoppelt ist und
• das Bestimmen der Lage im Raum-Koordinatensystem aus
□ den Positionen der Kameras (2ₐ, 2_{b}),
□ den durch die Winkelmesseinheiten (4ₐ, 4_{b}) erfassten Winkelausrichtungen (αₐ, βₐ; α_{b}, β_{b}) der Kameras (2ₐ, 2_{b}),
□ den Bildaufnahmen und
□ der Kenntnis der Merkmale (13; 23; 33)
erfolgt.

24. Verfahren nach Anspruch 22, wobei
die mindestens zwei Aufnahmeeinrichtungen (1ₐ, 1_{b}) jeweils derart ausgebildet sind, dass
• das Projektionszentrum der Kamera (2ₐ, 2_{b}) jeweils ausserhalb des Schnittpunkts der horizontalen Kippachse (Hₐ, H_{b}) und der vertikalen Stehachse (Vₐ, V_{b}) angeordnet ist,
• die Positionen der Kamera (2ₐ, 2_{b}) jeweils aus
□ der vorgegebenen Exzentrizität des Projektionszentrums der Kamera (2ₐ, 2_{b}) von dem Schnittpunkt,
□ den Winkelausrichtungen (αₐ, βₐ; α_{b}, β_{b}) und
□ den Positionen (Pₐ, P_{b}) der Aufnahmeeinrichtungen (1ₐ, 1_{b})
bestimmt werden und
• das Bestimmen der Lage im Raum-Koordinatensystem aus
□ den Positionen (Pₐ, P_{b}) der Aufnahmeeinrichtungen (1ₐ, 1_{b}),
□ den Exzentrizitäten der Projektionszentren der Kameras (2ₐ, 2_{b}),
□ den durch die Winkelmesseinheiten (4ₐ, 4_{b}) erfassten Winkelausrichtungen der Kameras (2ₐ, 2_{b}),
□ den Bildaufnahmen und
□ der Kenntnis der Merkmale (12; 22; 32) erfolgt.

25. Verfahren nach einem der Ansprüche 1 bis 24, wobei zumindest die erste Aufnahmeeinrichtung (1ₐ)
• einen ersten Emitter (6ₐ) aufweist,
□ der zum Emittieren eines ersten strukturierten Lichts (7ₐ) innerhalb des ersten Sichtfelds (8ₐ) der ersten Kamera (2ₐ) ausgebildet ist,
□ der gemeinsam mit der ersten Kamera (2ₐ) mittels der ersten Antriebseinheit (3ₐ) ausrichtbar ist und
□ dessen Winkelausrichtung mittels der im Raum-Koordinatensystem kalibrierten ersten Winkelmesseinheit (4ₐ) hochpräzise erfassbar ist,
wobei im Schritt des Aufnehmens der Bildaufnahmen
• das erste strukturierte Licht (7ₐ) vom dem ersten Emitter (6ₐ) derart auf das Objekt (12; 22; 32) projiziert wird, dass das erste strukturierte Licht (7ₐ) im Sichtfeld der zweiten Kamera (2_{b}) der zweiten Aufnahmeeinrichtung (1_{b}) liegt,
und wobei das Bestimmens der Lage des Objekts (12; 22; 32) im Raum-Koordinatensystem zusätzlich aus
• den Positionen (Pₐ, P_{b}) der Aufnahmeeinrichtungen (1ₐ, 1_{b}),
• der durch die Winkelmesseinheiten (4ₐ, 4_{b}) erfassten Winkelausrichtungen des ersten Emitters (6ₐ) und der zweiten Kamera (2_{b}) und
• den das erste strukturierte Licht (7ₐ) abbildenden Bildaufnahmen der zweiten Kamera (2_{b})
mittels Triangulation erfolgt.

26. Verfahren nach Anspruch 25, wobei
zumindest die zweite Aufnahmeeinrichtung (1_{b})
• einen zweiten Emitter (6_{b}) aufweist,
□ der zum Emittieren eines zweiten strukturierten Lichts (7_{b}) innerhalb des zweiten Sichtfelds (8_{b}) der zweiten Kamera (2_{b}) ausgebildet ist,
□ der gemeinsam mit der zweiten Kamera (2_{b}) mittels der zweiten Antriebseinheit (3_{b}) ausrichtbar ist und
□ dessen Winkelausrichtung mittels der im Raum-Koordinatensystem kalibrierten zweiten Winkelmesseinheit (4_{b}) hochpräzise erfassbar ist,
wobei im Schritt des Aufnehmens der Bildaufnahmen
• das zweite strukturierte Licht (7_{b}) von dem zweiten Emitter (6_{b}) derart auf zumindest den Teil der Merkmale (13; 23; 33) des Objekts (12; 22; 32) projiziert wird, dass das zweite strukturierte Licht (7_{b}) im Sichtfeld der ersten Kamera (2ₐ) der ersten Aufnahmeeinrichtung (1ₐ) liegt,
und wobei das Bestimmen der Lage des Objekts (12; 22; 32) im Raum-Koordinatensystem zusätzlich aus
• den Positionen (Pₐ, P_{b}) der Aufnahmeeinrichtungen (1ₐ, 1_{b}),
• der durch die Winkelmesseinheiten (4ₐ, 4_{b}) erfassten Winkelausrichtungen des zweiten Emitters (6_{b}) und der ersten Kamera (2ₐ) und
• den das zweite strukturierte Licht (7_{b}) abbildenden Bildaufnahmen der ersten Kamera (2ₐ) und
• der Kenntnis der Merkmale (13; 23; 33) auf dem Objekt (12; 22; 32)
mittels Triangulation erfolgt.

27. Verfahren nach einem der Ansprüche 1 bis 26, mit
• einer in einer bekannten dritten Position (P_{c}) und mit einer bekannten Ausrichtung angeordneten Emissionseinrichtung (1_{c}), die
□ einen dritten Emitter (6_{c}) aufweist,
· der zum Emittieren eines dritten strukturierten Lichts (7_{c}) ausgebildet ist,
· der mittels einer dritten Antriebseinheit (3_{c}) ausrichtbar ist und
· dessen Winkelausrichtung mittels einer im Raum-Koordinatensystem kalibrierten dritten Winkelmesseinheit (4_{c}) hochpräzise erfassbar ist,
wobei im Schritt des Aufnehmens der Bildaufnahmen
• das dritte strukturierte Licht (7_{c}) vom dem dritten Emitter (6_{c}) derart auf das Objekt (12; 22; 32) projiziert wird, dass das dritte strukturierte Licht (7_{c}) im Sichtfeld der ersten Kamera (2ₐ) der ersten Aufnahmeeinrichtung (1ₐ) liegt,
und wobei das Bestimmens der Lage des Objekts (12; 22; 32) im Raum-Koordinatensystem zusätzlich aus
• der Position (Pₐ) der ersten Aufnahmeeinrichtung (1ₐ),
• der durch die erste Winkelmesseinheit (4ₐ) erfassten Winkelausrichtung der ersten Kamera (2ₐ)
• der durch die dritte Winkelmesseinheit (4_{c}) erfassten Winkelausrichtung des dritten Emitters (6_{c}) und
• den das dritte strukturierte Licht (7_{c}) abbildenden Bildaufnahmen der ersten Kamera (2ₐ)
mittels Triangulation erfolgt.

28. Verfahren nach einem der Ansprüche 25 bis 27, wobei
das strukturierte Licht (7ₐ; 7_{b}; 7_{c}) als projizierte Laserlinie ausgebildet ist.

29. Verfahren nach einem der Ansprüche 25 bis 27, wobei
das strukturierte Licht (7ₐ; 7_{b}; 7_{c}) als in Form einer Laserlinie gefächert projizierter Laserpunkt ausgebildet ist.

30. Verfahren nach einem der Ansprüche 25 bis 27, wobei
das strukturierte Licht (7ₐ; 7_{b}; 7_{c}) als ein zweidimensional projiziertes Muster, insbesondere ein Laserraster, ausgebildet ist.

31. Verfahren nach einem der Ansprüche 1 bis 30, wobei
• zumindest die erste Aufnahmeeinrichtung (1ₐ) einen ersten Laserdistanzmesser (5ₐ) aufweist,
□ der gemeinsam mit der ersten Kamera (2ₐ) mittels der ersten Antriebseinheit (3ₐ) ausrichtbar ist und
□ dessen Winkelausrichtung mittels der im Raum-Koordinatensystem kalibrierten ersten Winkelmesseinheit (4ₐ) hochpräzise erfassbar ist.

32. Verfahren nach Anspruch 31, wobei
• die Position (Pₐ) der ersten Aufnahmeeinrichtung (1ₐ) im Raum-Koordinatensystem durch Zielen auf ortsfeste Zielmarken (T) mittels des ersten Laserdistanzmessers (5ₐ) bestimmt wird.

33. Verfahren nach Anspruch 31 oder 32, wobei
• das Bestimmen der Lage des Objekts (12; 22; 32) im Raum-Koordinatensystem zusätzlich erfolgt durch Zielen auf die Merkmale (13; 23; 33) auf dem Objekt (12; 22; 32).

34. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einer ersten optischen Aufnahmeeinrichtung (1ₐ), die in einem dreidimensionalen Raum-Koordinatensystem kalibriert und in einer bekannten ersten Position (Pₐ) mit einer bekannten Ausrichtung positioniert ist, mit
□ einer optisch kalibrierten ersten Kamera (2ₐ) zur Bildaufnahme innerhalb eines bestimmten ersten Sichtfelds (8ₐ),
□ einer ersten Antriebseinheit (3ₐ) zum - ein Verstellen des ersten Sichtfelds (8ₐ) bewirkenden - Ausrichten der ersten Kamera (2ₐ) und
□ einer im Raum-Koordinatensystem kalibrierten ersten Winkelmesseinheit (4ₐ) zum hochpräzisen Erfassen der Winkelausrichtung der ersten Kamera (2ₐ), so dass das erste Sichtfeld (8ₐ) im Raum-Koordinatensystem bestimmbar ist,
• mindestens einer zweiten optischen Aufnahmeeinrichtung (1_{b}), die in dem dreidimensionalen Raum-Koordinatensystem kalibriert und in einer bekannten zweiten Position (P_{b}) mit einer bekannten Ausrichtung positioniert ist, mit
□ einer optisch kalibrierten zweiten Kamera (2_{b}) zur Bildaufnahme innerhalb eines bestimmten zweiten Sichtfelds (8_{b}),
□ einer zweiten Antriebseinheit (3_{b}) zum - ein Verstellen des zweiten Sichtfelds (8_{b}) bewirkenden - Ausrichten der zweiten Kamera (2_{b}) und
□ einer im Raum-Koordinatensystem kalibrierten zweiten Winkelmesseinheit (4_{b}) zum hochpräzisen Erfassen der Winkelausrichtung der zweiten Kamera (2_{b}), so dass das zweite Sichtfeld (8_{b}) im Raum-Koordinatensystem bestimmbar ist,
wobei die mindestens zwei Positionen (Pₐ, P_{b}) derart beabstandet sind, dass eine dreidimensionale Bildaufnahme des mindestens einen Objekts mittels der mindestens zwei Aufnahmeeinrichtungen (1ₐ, 1_{b}) durch zumindest teilweise überscheidende Sichtfelder (8ₐ, 8_{b}) ermöglicht ist, und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11) und den mindestens zwei optischen Aufnahmeeinrichtungen (1ₐ, 1_{b}) derart in Datenverbindung steht, dass
• der Steuervorrichtung (9) die von den Kameras (2ₐ, 2_{b}) aufgenommene Bildaufnahmen zugeführt werden,
• der Steuervorrichtung (9) die von den Winkelmesseinheiten (4ₐ; 4_{b}) erfassten Winkelausrichtungen der Kameras (2ₐ; 2_{b}) zugeführt werden,
• die Antriebseinheiten (3ₐ; 3_{b}) mittels der Steuervorrichtung (9) zum Ausrichten der Kameras (2ₐ, 2_{b}) angesteuert werden und
• der erste Industrieroboter (11) in Stellungen, die durch die Steuervorrichtung (9) vorgegeben werden, verstellt wird,
wobei die Steuervorrichtung (9) und deren Datenverarbeitungseinrichtung derart ausgebildet sind, dass
• ein erstes Objekt (12), das der Steuervorrichtung (9) bekannte optisch erfassbare erste Merkmale aufweist (13), von dem ersten Industrieroboter (11) innerhalb einer Greiftoleranz gegriffen wird und gehalten wird,
• eine derartige, die Greiftoleranz korrigierende erste Abgleichgrösse für den ersten Industrieroboter (11) durch die Steuervorrichtung (9) bestimmt wird, dass das erste Objekt (12) im Raum-Koordinatensystem durch Vorgabe einer Stellung des ersten Industrieroboters (11) abgeglichen verstellbar ist, wobei das Bestimmen der ersten Abgleichgrösse mittels der Steuervorrichtung (9) erfolgt durch die Schritte
□ Ausrichten der mindestens zwei Kameras (2ₐ, 2_{b}) jeweils mittels der Antriebseinheit (3ₐ; 3_{b}) mit sich zumindest teilweise überschneidenden Sichtfeldern (8ₐ, 8_{b}) auf zumindest einen Teil der ersten Merkmale (13) des ersten Objekts (12), das in einer ersten Abgleichstellung des ersten Industrieroboters (11) gehaltenen wird,
□ Aufnehmen erster Bildaufnahmen,
□ Bestimmen der Lage des ersten Objekts (12) im Raum-Koordinatensystem in der ersten Abgleichstellung des ersten Industrieroboters (11) aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den ersten Bildaufnahmen und
· der Kenntnis der ersten Merkmale (13) auf dem ersten Objekt (12),
und
□ Bestimmen der ersten Abgleichgrösse durch Heranziehen
· der ersten Abgleichstellung des ersten Industrieroboters (11) und
· zumindest der bestimmten Lage des ersten Objekts (12) in der ersten Abgleichstellung des ersten Industrieroboters (11)
und
• das erste Objekt (12) durch die Steuervorrichtung (9) hochpräzise in eine erste Endlage verstellt wird durch die sich bis zum Erreichen der ersten Endlage in einer vorgegebenen Toleranz wiederholenden Schritte
□ Aufnehmen weiterer erster Bildaufnahmen,
□ Bestimmen der aktuellen Lage des ersten Objekts (12) im Raum-Koordinatensystem aus
· den Positionen (Pₐ, P_{b}) der Aufnahmeeinrichtungen (1ₐ, 1_{b}),
· den durch die Winkelmesseinheiten (4ₐ, 4_{b}) erfassten Winkelausrichtungen der Kameras (2ₐ, 2_{b}),
· den weiteren ersten Bildaufnahmen und
· der Kenntnis der ersten Merkmale (13) auf dem ersten Objekt (12),
□ Berechnen der Lagedifferenz zwischen der aktuellen Lage des ersten Objekts (12) und der ersten Endlage,
□ Berechnen einer neuen Sollstellung des ersten Industrieroboters (11) unter Berücksichtigung der ersten Abgleichgrösse aus
· der aktuellen Stellung des ersten Industrieroboters (11) und
· einer mit der Lagedifferenz verknüpften Grösse,
und
□ Verstellen des ersten Industrieroboters (11) in die neue Sollstellung.

35. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einer ersten optischen Aufnahmeeinrichtung (1ₐ), die in einem dreidimensionalen Raum-Koordinatensystem kalibriert und in einer bekannten ersten Position (Pₐ) mit einer bekannten Ausrichtung positioniert ist, mit
□ einer optisch kalibrierten ersten Kamera (2ₐ) zur Bildaufnahme innerhalb eines bestimmten ersten Sichtfelds (8ₐ),
□ einer ersten Antriebseinheit (3ₐ) zum - ein Verstellen des ersten Sichtfelds (8ₐ) bewirkenden - Ausrichten der ersten Kamera (2ₐ) und
□ einer im Raum-Koordinatensystem kalibrierten ersten Winkelmesseinheit (4ₐ) zum hochpräzisen Erfassen der Winkelausrichtung der ersten Kamera (2ₐ), so dass das erste Sichtfeld (8ₐ) im Raum-Koordinatensystem bestimmbar ist,
• mindestens einer zweiten optischen Aufnahmeeinrichtung (1_{b}), die in dem dreidimensionalen Raum-Koordinatensystem kalibriert und in einer bekannten zweiten Position (P_{b}) mit einer bekannten Ausrichtung positioniert ist, mit
□ einer optisch kalibrierten zweiten Kamera (2_{b}) zur Bildaufnahme innerhalb eines bestimmten zweiten Sichtfelds (8_{b}),
□ einer zweiten Antriebseinheit (3_{b}) zum - ein Verstellen des zweiten Sichtfelds (8_{b}) bewirkenden - Ausrichten der zweiten Kamera (2_{b}) und
□ einer im Raum-Koordinatensystem kalibrierten zweiten Winkelmesseinheit (4_{b}) zum hochpräzisen Erfassen der Winkelausrichtung der zweiten Kamera (2_{b}), so dass das zweite Sichtfeld (8_{b}) im Raum-Koordinatensystem bestimmbar ist,
wobei die mindestens zwei Positionen (Pₐ, P_{b}) derart beabstandet sind, dass eine dreidimensionale Bildaufnahme des mindestens einen Objekts mittels der mindestens zwei Aufnahmeeinrichtungen (1ₐ, 1_{b}) durch zumindest teilweise überscheidende Sichtfelder (8ₐ, 8_{b}) ermöglicht ist, und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11) und den mindestens zwei optischen Aufnahmeeinrichtungen (1ₐ, 1_{b}) derart in Datenverbindung steht, dass
• der Steuervorrichtung (9) die von den Kameras (2ₐ, 2_{b}) aufgenommene Bildaufnahmen zugeführt werden,
• der Steuervorrichtung (9) die von den Winkelmesseinheiten (4ₐ; 4_{b}) erfassten Winkelausrichtungen der Kameras (2ₐ; 2_{b}) zugeführt werden,
• die Antriebseinheiten (3ₐ; 3_{b}) mittels der Steuervorrichtung (9) zum Ausrichten der Kameras (2ₐ, 2_{b}) angesteuert werden und
• der erste Industrieroboter (11) in Stellungen, die durch die Steuervorrichtung (9) vorgegeben werden, verstellt wird,
wobei die Steuervorrichtung (9) und deren Datenverarbeitungseinrichtung zum Ausführen des Verfahrens nach einem der Ansprüche 1, 2, 3, 14 bis 33 ausgebildet ist.

36. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einem in vorgebbare Stellungen verstellbaren zweiten Industrieroboter (21),
• einer ersten optischen Aufnahmeeinrichtung (1ₐ), die in einem dreidimensionalen Raum-Koordinatensystem kalibriert und in einer bekannten ersten Position (Pₐ) mit einer bekannten Ausrichtung positioniert ist, mit
□ einer optisch kalibrierten ersten Kamera (2ₐ) zur Bildaufnahme innerhalb eines bestimmten ersten Sichtfelds (8ₐ),
□ einer ersten Antriebseinheit (3ₐ) zum - ein Verstellen des ersten Sichtfelds (8ₐ) bewirkenden - Ausrichten der ersten Kamera (2ₐ) und
□ einer im Raum-Koordinatensystem kalibrierten ersten Winkelmesseinheit (4ₐ) zum hochpräzisen Erfassen der Winkelausrichtung der ersten Kamera (2ₐ), so dass das erste Sichtfeld (8ₐ) im Raum-Koordinatensystem bestimmbar ist,
• mindestens einer zweiten optischen Aufnahmeeinrichtung (1_{b}), die in dem dreidimensionalen Raum-Koordinatensystem kalibriert und in einer bekannten zweiten Position (P_{b}) mit einer bekannten Ausrichtung positioniert ist, mit
□ einer optisch kalibrierten zweiten Kamera (2_{b}) zur Bildaufnahme innerhalb eines bestimmten zweiten Sichtfelds (8_{b}),
□ einer zweiten Antriebseinheit (3_{b}) zum - ein Verstellen des zweiten Sichtfelds (8_{b}) bewirkenden - Ausrichten der zweiten Kamera (2_{b}) und
□ einer im Raum-Koordinatensystem kalibrierten zweiten Winkelmesseinheit (4_{b}) zum hochpräzisen Erfassen der Winkelausrichtung der zweiten Kamera (2_{b}), so dass das zweite Sichtfeld (8_{b}) im Raum-Koordinatensystem bestimmbar ist,
wobei die mindestens zwei Positionen (Pₐ, P_{b}) derart beabstandet sind, dass eine dreidimensionale Bildaufnahme des mindestens einen Objekts mittels der mindestens zwei Aufnahmeeinrichtungen (1ₐ, 1_{b}) durch zumindest teilweise überscheidende Sichtfelder (8ₐ, 8_{b}) ermöglicht ist, und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11), dem zweiten Industrieroboter (21) und den mindestens zwei optischen Aufnahmeeinrichtungen (1ₐ, 1_{b}) derart in Datenverbindung steht, dass
• der Steuervorrichtung (9) die von den Kameras (2ₐ, 2_{b}) aufgenommene Bildaufnahmen zugeführt werden,
• der Steuervorrichtung (9) die von den Winkelmesseinheiten (4ₐ; 4_{b}) erfassten Winkelausrichtungen der Kameras (2ₐ; 2_{b}) zugeführt werden,
• die Antriebseinheiten (3ₐ; 3_{b}) mittels der Steuervorrichtung (9) zum Ausrichten der Kameras (2ₐ, 2_{b}) angesteuert werden und
• der erste Industrieroboter (11) und der zweite Industrieroboter in Stellungen, die durch die Steuervorrichtung (9) vorgegeben werden, verstellt werden, und
wobei die Steuervorrichtung (9) und deren Datenverarbeitungseinrichtung zum Ausführen des Verfahrens nach einem der Ansprüche 4 bis 11 ausgebildet ist.

37. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einem in vorgebbare Stellungen verstellbaren zweiten Industrieroboter (21),
• einem in vorgebbare Stellungen verstellbaren dritten Industrieroboter (31), der ein als Bearbeitungswerkzeug ausgebildetes drittes Objekt (32) innerhalb einer Haltetoleranz hält, wobei das Bearbeitungswerkzeug (32) oder ein hierzu gekoppeltes Teil des dritten Industrieroboters (31) bekannte optisch erfassbare dritte Merkmale (33) aufweist,
• einer ersten optischen Aufnahmeeinrichtung (1ₐ), die in einem dreidimensionalen Raum-Koordinatensystem kalibriert und in einer bekannten ersten Position (Pₐ) mit einer bekannten Ausrichtung positioniert ist, mit
□ einer optisch kalibrierten ersten Kamera (2ₐ) zur Bildaufnahme innerhalb eines bestimmten ersten Sichtfelds (8ₐ),
□ einer ersten Antriebseinheit (3ₐ) zum - ein Verstellen des ersten Sichtfelds (8ₐ) bewirkenden - Ausrichten der ersten Kamera (2ₐ) und
□ einer im Raum-Koordinatensystem kalibrierten ersten Winkelmesseinheit (4ₐ) zum hochpräzisen Erfassen der Winkelausrichtung der ersten Kamera (2ₐ), so dass das erste Sichtfeld (8ₐ) im Raum-Koordinatensystem bestimmbar ist,
• mindestens einer zweiten optischen Aufnahmeeinrichtung (1_{b}), die in dem dreidimensionalen Raum-Koordinatensystem kalibriert und in einer bekannten zweiten Position (P_{b}) mit einer bekannten Ausrichtung positioniert ist, mit
□ einer optisch kalibrierten zweiten Kamera (2_{b}) zur Bildaufnahme innerhalb eines bestimmten zweiten Sichtfelds (8_{b}),
□ einer zweiten Antriebseinheit (3_{b}) zum - ein Verstellen des zweiten Sichtfelds (8_{b}) bewirkenden - Ausrichten der zweiten Kamera (2_{b}) und
□ einer im Raum-Koordinatensystem kalibrierten zweiten Winkelmesseinheit (4_{b}) zum hochpräzisen Erfassen der Winkelausrichtung der zweiten Kamera (2_{b}), so dass das zweite Sichtfeld (8_{b}) im Raum-Koordinatensystem bestimmbar ist,
wobei die mindestens zwei Positionen (Pₐ, P_{b}) derart beabstandet sind, dass eine dreidimensionale Bildaufnahme des mindestens einen Objekts mittels der mindestens zwei Aufnahmeeinrichtungen (1ₐ, 1_{b}) durch zumindest teilweise überscheidende Sichtfelder (8ₐ, 8_{b}) ermöglicht ist, und
• einer Steuervorrichtung (9), die eine zur Bildverarbeitung ausgebildete Datenverarbeitungseinrichtung aufweist,
wobei die Steuervorrichtung mit dem ersten Industrieroboter (11), dem zweiten Industrieroboter (21), dem dritten Industrieroboter (31) und den mindestens zwei optischen Aufnahmeeinrichtungen (1ₐ, 1_{b}) derart in Datenverbindung steht, dass
• der Steuervorrichtung (9) die von den Kameras (2ₐ, 2_{b}) aufgenommene Bildaufnahmen zugeführt werden,
• der Steuervorrichtung (9) die von den Winkelmesseinheiten (4ₐ, 4_{b}) erfassten Winkelausrichtungen der Kameras (2ₐ; 2_{b}) zugeführt werden,
• die Antriebseinheiten (3ₐ; 3_{b}) mittels der Steuervorrichtung (9) zum Ausrichten der Kameras (2ₐ, 2_{b}) angesteuert werden, und
• der erste Industrieroboter (11), der zweite Industrieroboter (21) und der dritte Industrieroboter (31) in Stellungen, die durch die Steuervorrichtung (9) vorgegeben werden, verstellt werden, und
wobei die Steuervorrichtung (9) zum Ausführen des Verfahrens nach einem der Ansprüche 12 oder 13 ausgebildet ist.

38. System nach einem der Ansprüche 34 bis 37, wobei
die mindestens zwei Aufnahmeeinrichtungen (1ₐ, 1_{b}) jeweils derart ausgebildet sind, dass
• die Kamera (2ₐ; 2_{b}) mittels der Antriebseinheit (3ₐ; 3_{b}) um jeweils eine in Bezug auf das Raum-Koordinatensystem horizontale Kippachse (Hₐ; H_{b}) und eine vertikale Stehachse (Vₐ; V_{b}) ausrichtbar ist und
• durch die Winkelmesseinheit (4ₐ; 4_{b}) jeweils die horizontale Winkelausrichtung (αₐ; α_{b}) um die Stehachse (Vₐ; V_{b}) und die vertikale Winkelausrichtung (βₐ; β_{b}) um die Kippachse (Hₐ; H_{b}) im Raum-Koordinatensystem erfasst werden.

39. System nach Anspruch 38, wobei
sich die horizontale Kippachse (Hₐ; H_{b}) und die vertikale Stehachse (Vₐ; V_{b}) im Wesentlichen schneiden.

40. System nach Anspruch 39, wobei
die mindestens zwei Aufnahmeeinrichtungen (1ₐ, 1_{b}) jeweils als Video-Theodolit ausgebildet sind.
